(19) Europäisches Patentamt
European Patent Office
Office européen des brevets

(11) EP 4 190 832 B1

(12) EUROPEAN PATENT SPECIFICATION

(45) Date of publication and mention of the grant of the patent:
**08.04.2026 Bulletin 2026/15**

(21) Application number: **22211321.9**

(22) Date of filing: **05.12.2022**

(51) International Patent Classification (IPC):
***C08G 18/02*** *(2006.01)* ***C08G 18/16*** *(2006.01)*
***C08G 18/18*** *(2006.01)* ***C08G 18/22*** *(2006.01)*
***C08G 18/28*** *(2006.01)* ***C08G 18/78*** *(2006.01)*
***C08G 18/79*** *(2006.01)* ***C09D 175/04*** *(2006.01)*

(52) Cooperative Patent Classification (CPC):
**C08G 18/022; C08G 18/168; C08G 18/1875; C08G 18/222; C08G 18/2815; C08G 18/283; C08G 18/7837; C08G 18/792; C09D 175/04**

(54) **POLYISOCYANATE COMPOSITION, COATING COMPOSITION AND COATED SUBSTRATE**

POLYISOCYANATZUSAMMENSETZUNG, BESCHICHTUNGSZUSAMMENSETZUNG UND BESCHICHTETES SUBSTRAT

COMPOSITION DE POLYISOCYANATE, COMPOSITION DE REVÊTEMENT ET SUBSTRAT REVÊTU

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.12.2021 JP 2021197887**

(43) Date of publication of application:
**07.06.2023 Bulletin 2023/23**

(73) Proprietor: **Asahi Kasei Kabushiki Kaisha**
**Tokyo 1000006 (JP)**

(72) Inventors:
- **JIANG, Jiyue**
**Tokyo, 100-0006 (JP)**
- **LI, Guan**
**Tokyo, 100-0006 (JP)**
- **FUKUCHI, Takashi**
**Tokyo, 100-0006 (JP)**

(74) Representative: **Strehl & Partner mbB**
**Maximilianstrasse 54**
**80538 München (DE)**

(56) References cited:
**EP-A1- 3 560 974** **EP-A1- 3 812 411**
**EP-A1- 4 063 418** **US-A1- 2012 238 697**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

TECHNICAL FIELD

The present invention relates to a polyisocyanate composition, a coating composition, and a coated substrate.

BACKGROUND OF THE INVENTION

Coating films obtained from two-liquid polyurethane compositions that use a polyisocyanate composition derived from an aliphatic diisocyanate or an alicyclic diisocyanate as a curing agent exhibit excellent performance in terms of weather resistance, chemical resistance and wear resistance. As a result, these coating films are widely used as coating materials, inks, or adhesives. In recent years, awareness of global environmental issues has increased considerably, and water-based two-liquid polyurethane compositions have been proposed that either use no organic solvent or contain a reduced amount of organic solvent. However, due to their composition, water-based two-liquid polyurethane compositions can suffer from a variety of problems compared with solvent-based two-liquid polyurethane compositions, including poor dispersion in water or a propensity for reaction with water, causing a shortened pot life. Accordingly, a polyisocyanate composition that has favorable dispersibility in water and is also capable of suppressing the reaction between the isocyanate groups and water in a water-dispersed state is sought.

For example, polyisocyanate compounds having dispersibility in water and water-based two-liquid polyurethane compositions that use those polyisocyanate compounds are proposed for producing water-based two-liquid polyurethane compositions in Patent Document 1 and Patent Document 2. Furthermore, polyisocyanate compositions containing a modified polyisocyanate obtained by the reaction of a polyisocyanate and an amine salt of a sulfonic acid having a hydroxyl group are disclosed in Patent Document 3 and Patent Document 4.

DOCUMENTS OF RELATED ART

Patent Documents

Patent Document 1: Japanese Unexamined Patent Application, First Publication No. Hei 05-222150
Patent Document 2: Japanese Unexamined Patent Application, First Publication No. Hei 09-328654
Patent Document 3: Japanese Unexamined Patent Application, First Publication No. 2015-205957
Patent Document 4: Japanese Unexamined Patent Application, First Publication No. 2016-017157
EP 3 812 411 A1 discloses a polyisocyanate composition comprising a hydrophilic polyisocyanate compound derived from a diisocyanate and a hydrophilic compound and, wherein the polyisocyanate composition can comprise a nonionic polyisocyanate compound.
EP 4 063 418 A1, EP 3 560 974 A1 and US 2012/238697 A1 disclose a polyisocyanate composition comprising an anionic polyisocyanate compound, wherein the polyisocyanate composition can comprise a nonionic polyisocyanate compound.

SUMMARY OF THE INVENTION

PROBLEMS TO BE SOLVED BY THE INVENTION

However, with the compositions disclosed in Patent Document 1 and Patent Document 2, achieving a combination of superior pot life and dispersibility upon dispersion in water or a main agent containing water is problematic. Patent Document 3 and Patent Document 4 disclose that by using a polyisocyanate containing a sulfonate group, the dispersibility in water can be improved, but because the compatibility of sulfonate groups and polyisocyanates is poor, a problem arises in that the turbidity tends to develop in the synthesized polyisocyanate.

The present invention has been developed in light of the aforementioned circumstances, and provides a polyisocyanate composition which yields excellent pot life and dispersibility when dispersed in water or a main agent containing water, and yields excellent external appearance, water resistance and hardness when used to form a coating film, as well as providing a coating composition and a coated substrate that use the polyisocyanate composition.

MEANS TO SOLVE THE PROBLEMS

The present invention is set out in the appended claims.

EFFECTS OF THE INVENTION

By using the polyisocyanate composition of the present invention, a polyisocyanate composition can be provided which, when dispersed in water or a main agent containing water, yields excellent pot life and dispersibility, and when used to form a coating film, yields excellent external appearance, water resistance and hardness. The coating composition of the present invention contains the aforementioned polyisocyanate composition, and when used to form a coating film, yields excellent external appearance, water resistance and hardness. The coated substrate of the present invention contains a coating film obtained by curing the coating composition, and exhibits excellent external appearance, water resistance and hardness.

EMBODIMENTS FOR CARRYING OUT THE INVENTION

<<Polyisocyanate Composition>>

The polyisocyanate composition of the present embodiment contains:

an ionic polyisocyanate compound (A) derived from at least one ionic compound selected from the group consisting of anionic compounds and cationic compounds, and a polyisocyanate compound (a1), and
a nonionic polyisocyanate compound (B) derived from a nonionic compound and a polyisocyanate compound (b1).

The polyisocyanate compound (a1) and the polyisocyanate compound (b1) are each a polyisocyanate compound derived from at least one diisocyanate selected from the group consisting of aliphatic diisocyanates, alicyclic diisocyanates and aromatic diisocyanates.
In the polyisocyanate composition of the present embodiment, the mass ratio (A)/(B) of the ionic polyisocyanate compound (A) relative to the nonionic polyisocyanate compound (B) is preferably 10/90 to 99/1.
The upper limit of the mass ratio (A)/(B) is more preferably 98/2, even more preferably 95/5, and particularly preferably 90/10. On the other hand, the lower limit of the mass ratio (A)/(B) is more preferably 40/60, even more preferably 50/50, still more preferably 60/40, particularly preferably 70/30, and most preferably 80/20.
By ensuring that the mass ratio (A)/(B) falls within the aforementioned range, superior pot life is achieved upon dispersion in water or a main agent containing water, and excellent gloss, hardness and water resistance can be achieved when a coating film is formed.
In the polyisocyanate composition of the present embodiment, the mass ratio (a2)/(b2) of a structural unit (a2) derived from the ionic compound contained in the ionic polyisocyanate compound (A) relative to a structural unit (b2) derived from the nonionic compound contained in the nonionic polyisocyanate compound (B) is 50/50 to 98/2.
The mass ratio (a2)/(b2) is preferably 60/40 to 97/3, more preferably 70/30 to 95/5, and even more preferably 80/20 to 90/10.
By ensuring that the mass ratio (a2)/(b2) falls within the aforementioned range, superior pot life is achieved upon dispersion in water or a main agent containing water, and excellent gloss, hardness and water resistance can be achieved when a coating film is formed.
The mass ratio (A)/(B) and the mass ratio (a2)/(b2) can be measured by liquid chromatography - mass spectrometry (LC-MS). Specifically, using the polyisocyanate composition as a sample, the modification rate by the ionic compound in the ionic polyisocyanate (A) and the modification rate by the nonionic compound in the nonionic polyisocyanate (B) are calculated from the ratios between the peak surface areas of the ionic polyisocyanate (A), the nonionic polyisocyanate (B) and the unmodified polyisocyanate compound in a liquid chromatography (LC) trace at 220 nm. Subsequently, by calculating the amounts of the ionic polyisocyanate (A) and the nonionic polyisocyanate (B) using these calculated rates of modification, the mass ratio (A)/(B) can be determined. Further, the ratio of the modification rate by the ionic compound in the ionic polyisocyanate (A) relative to the modification rate by the nonionic compound in the nonionic polyisocyanate (B) was used as the mass ratio (a2)/(b2).
Examples of the LC measurement conditions for the nonionic polyisocyanate compound (B) and the unmodified polyisocyanate compound include the following measurement conditions.

(Measurement Conditions)

LC Apparatus: UPLC (trade name), manufactured by Waters Corporation
Column: ACQUITY UPLC HSS T3 1.8 μm C18, inner diameter 2.1 mm × length 50 mm, manufactured by Waters Corporation

Flow rate: 0.3 mL/min
Mobile phase: A = 10 mM ammonium acetate aqueous solution, B = acetonitrile
Gradient conditions: initial mobile phase composition A/B = 98/2 (volumetric ratio), following sample injection, the ratio of B was increased linearly so that after 10 minutes A/B = 0/100 (volumetric ratio)
Detection method: photodiode array detector, measurement wavelength 220 nm

The ionic polyisocyanate (A) can be measured under the aforementioned measurement conditions, but with the following additional measurement conditions.

(Additional Measurement Conditions)

Ionization mode: electrospray ionization, positive and negative ion detection
Scan range: m/z 100 to 2,000

By employing the constitution described above, the polyisocyanate composition of the present embodiment yields excellent pot life and dispersibility when dispersed in water or a main agent containing water, and forms a coating film having excellent external appearance, hardness and water resistance, as illustrated in the examples described below.
In this description, the term "pot life" for a composition such as a coating material or an adhesive means the length of time in which performance of the composition as an uncured composition is maintained after preparation of the composition by mixing the main agent and the curing agent, and is also referred to as the usable life. As illustrated in the examples below, the pot life can be evaluated by measuring the time in which the amount of isocyanate groups in the coating composition prepared by mixing the polyisocyanate composition (curing agent) of the present embodiment and the main agent is maintained at 80 mol% or higher.
The constituent components of the polyisocyanate composition of the present embodiment are described below in further detail.

<Ionic Polyisocyanate (A) and Nonionic Polyisocyanate (B)>

The polyisocyanate composition of the present embodiment contains the ionic polyisocyanate (A) and the nonionic polyisocyanate (B). Hereinafter, the ionic polyisocyanate (A) and the nonionic polyisocyanate (B) may be jointly referred to as hydrophilic polyisocyanate compounds.
The polyisocyanate composition of the present embodiment may also contain a polyisocyanate that does not contain any ionic functional groups or nonionic functional groups within a molecule thereof (hereinafter, may be referred to as an "unmodified polyisocyanate (C)"). Unless specifically stated otherwise, the below-mentioned various characteristics of the polyisocyanate composition of the present embodiment are characteristics that describe a state containing the ionic polyisocyanate (A), the nonionic polyisocyanate (B), and the unmodified polyisocyanate (C).
The ionic polyisocyanate (A) is a compound obtained by reacting an ionic compound and the polyisocyanate compound (a1), namely, a reaction product of an ionic compound and the polyisocyanate compound (a1). The ionic compound is at least one compound selected from the group consisting of anionic compounds and cationic compounds.
The nonionic polyisocyanate (B) is a compound obtained by reacting a nonionic compound and the polyisocyanate compound (b1), namely, a reaction product of a nonionic compound and the polyisocyanate compound (b1).
The polyisocyanate compound (a1) and the polyisocyanate compound (b1) are each independently a polyisocyanate compound derived from at least one diisocyanate selected from the group consisting of aliphatic diisocyanates, alicyclic diisocyanates and aromatic diisocyanates.
The polyisocyanate compound (a1) and the polyisocyanate compound (b1) may be a compound identical to or different from each other. Hereinafter, the polyisocyanate compound (a1) and the polyisocyanate compound (b1) may be jointly referred to as "the polyisocyanate compound".

[Polyisocyanate Compound]

The polyisocyanate compound used as the raw material of the ionic polyisocyanate (A) and the nonionic polyisocyanate (B) is a polyisocyanate compound derived from at least one diisocyanate selected from the group consisting of aliphatic diisocyanates, alicyclic diisocyanates and aromatic diisocyanates.
Examples of the aliphatic diisocyanates include, but are not limited to, 1,4-diisocyanatobutane, 1,5-diisocyanatopentane, ethyl (2,6-diisocyanato)hexanoate, 1,6-diisocyanatohexane (hereinafter, may be abbreviated as "HDI"), 1,9-diisocyanatononane, 1,12-diisocyanatododecane, and 2,2,4- or 2,4,4-trimethyl-1,6-diisocyanatohexane.

Examples of the alicyclic diisocyanates include, but are not limited to, 1,3- or 1,4-bis(isocyanatomethyl) cyclohexane (hereinafter, may be abbreviated as "hydrogenated XDI"), 1,3- or 1,4-diisocyanatocyclohexane, 3,5,5-trimethyl-1-isocyanato-3-(isocyanatomethyl)cyclohexane (hereinafter, may be abbreviated as "IPDI"), 4,4'-diisocyanatodicyclohexylmethane (hereinafter, may be abbreviated as "hydrogenated MDI"), and 2,5- or 2,6-diisocyanatomethylnorbornane.

Examples of the aromatic diisocyanates include, but are not limited to, xylylene diisocyanate, tolylene diisocyanate, and diphenylmethane diisocyanate.

Among them, the diisocyanate is preferably HDI, IPDI, hydrogenated XDI or hydrogenated MDI, and more preferably HDI or IPDI, from the viewpoint of weather resistance.

Further, an aliphatic triisocyanate may also be included as the polyisocyanate compound. Examples of the aliphatic triisocyanates include 1,3,6-triisocyanatohexane, 1,8-diisocyanato-4-isocyanatomethyloctane and 2-isocyanatoethyl-2,6-diisocyanato-hexanoate.

Furthermore, one of these polyisocyanate compounds may be used alone, or a combination of at least two thereof may be used.

Although there are no particular limitations on the polyisocyanate compound derived from the aforementioned diisocyanate(s), examples thereof include polyisocyanates described below in (a) to (h):

(a) polyisocyanates having an uretdione group obtained by cyclization and dimerization of two isocyanate groups;
(b) polyisocyanates having an isocyanurate group or an iminooxadiazinedione group obtained by cyclization and trimerization of three isocyanate groups;
(c) polyisocyanates having a biuret group obtained by reacting three isocyanate groups and one water molecule;
(d) polyisocyanates having an oxadiazinetrione group obtained by reacting two isocyanate groups and one molecule of carbon dioxide;
(e) polyisocyanates having a plurality of urethane groups obtained by reacting one isocyanate group and one hydroxyl group;
(f) polyisocyanates having an allophanate group obtained by reacting two isocyanate groups and one hydroxyl group;
(g) polyisocyanates having an acylurea group obtained by reacting one isocyanate group and one carboxyl group; and
(h) polyisocyanates having a urea group obtained by reacting one isocyanate group and one primary or secondary amine.

Among them, the polyisocyanate compound preferably has an isocyanurate group, an uretdione group or an allophanate group within a molecule thereof.

Furthermore, the polyisocyanate composition of the present embodiment preferably contains an isocyanurate group, a uretdione group and an allophanate group. **In** other words, The polyisocyanate composition of the present embodiment may contain a mixture of polyisocyanate compounds each having one of these functional groups, or may contain a mixture of polyisocyanate compounds each having two or more of these functional groups, or may contain a polyisocyanate compound having three of these functional groups.

An uretdione group is a functional group obtained by the cyclization and dimerization of two isocyanate groups, and refers to a structure of formula (a) shown below. Polyisocyanates having uretdione groups have low viscosity and favorable dispersibility.

An isocyanurate group is a functional group obtained by cyclization and trimerization of three isocyanate groups, and refers to a structure of formula (b1) shown below.

An iminooxadiazinedione group is a functional group obtained by cyclization and trimerization of three isocyanate groups, and refers to a structure of formula (b2) shown below.

An allophanate group is a functional group formed by reacting a hydroxyl group of an alcohol and an isocyanate group, and refers to a structure of formula (f) shown below.

In each of the following formulas, each of the wavy lines represents a bonding location, and is a bonding site to a residue formed by removal of one isocyanate from the polyisocyanate.

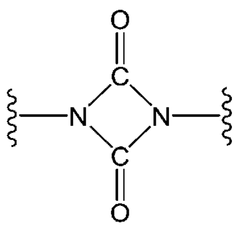
( a )

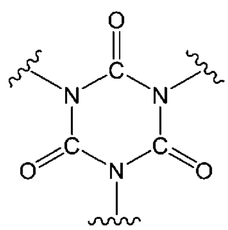
( b1 )

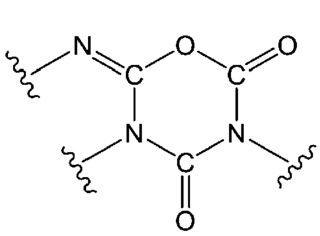 ( b2 )

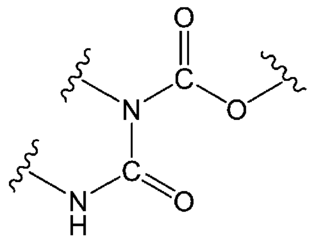 ( f )

**In** the polyisocyanate composition of the present embodiment, the mole fraction of isocyanurate groups, relative to the total molar amount (100 mol%) of isocyanurate groups, iminooxadiazinedione groups, uretdione groups and allophanate groups, is preferably 70.0 mol% to 90.0 mol%, and more preferably 80.0 mol% to 88.0 mol%. By ensuring that the mole fraction of isocyanurate groups falls within this range, the water resistance and hardness of the obtained coating film are more superior.

**In** the polyisocyanate composition of the present embodiment, the mole fraction of iminooxadiazinedione groups, relative to the total molar amount (100 mol%) of isocyanurate groups, iminooxadiazinedione groups, uretdione groups and allophanate groups, is preferably 1.0 mol% to 3.5 mol%, and more preferably 2.0 mol% to 3.0 mol%.

In the polyisocyanate composition of the present embodiment, the mole fraction of allophanate groups, relative to the total molar amount (100 mol%) of isocyanurate groups, iminooxadiazinedione groups, uretdione groups and allophanate groups, is preferably 0.1 mol% to 30.0 mol%, and more preferably 1.0 mol% to 20.0 mol%.

In the polyisocyanate composition of the present embodiment, the mole fraction of uretdione groups, relative to the total molar amount (100 mol%) of isocyanurate groups, iminooxadiazinedione groups, uretdione groups and allophanate groups, is preferably 0.1 mol% to 30.0 mol%, and more preferably 0.2 mol% to 25.0 mol%.

In the polyisocyanate composition of the present embodiment, the total amount of uretdione groups and allophanate groups, relative to the total molar amount (100 mol%) of isocyanurate groups, iminooxadiazinedione groups, uretdione groups and allophanate groups, is preferably1.0 mol% to 30.0 mol%, and more preferably 2.0 mol% to 25.0 mol%.

The mole ratio of uretdione groups relative to allophanate groups (uretdione groups / allophanate groups) is preferably 0.1 to 20.0, more preferably 0.2 to 10.0, and even more preferably 0.3 to 5.0. By ensuring that the total amount of uretdione groups and allophanate groups, and the mole ratio of uretdione groups / allophanate groups fall within the respective ranges described above, the pot life of the polyisocyanate composition can be further lengthened, and the gloss, hardness and water resistance of the resulting coating film are even more superior.

The amount of each of the aforementioned structural units derived from isocyanate groups within the polyisocyanate composition of the present embodiment can be measured by $^{13}$C-NMR measurement. Specifically, measurements were conducted using Biospin Avance 600 (trade name) manufactured by Bruker Corporation under the measurement conditions described below.

(Measurement Conditions)

$^{13}$C-NMR apparatus: AVANCE 600 (manufactured by Bruker Corporation)

CryoProbe (manufactured by Bruker Corporation)
CryoProbe (registered trademark)
CPDUL
600S3-C/H-D-05Z

Resonance frequency: 150 MHz
Concentration: 60 wt/vol%
Shift reference: $CDCl_3$ (77 ppm)
Number of integrations: 10,000
Pulse program: zgpg 30 (proton perfect decoupling method, waiting time: 2 sec)

The signal integral values described below are divided by the number of measured carbons to determine each of the mole fractions relative to the total molar amount (100 mol%) of isocyanurate groups, iminooxadiazinedione groups, allophanate groups and uretdione groups. Using these obtained mole fractions, the total amount of uretdione groups and allophanate groups relative to the total molar amount of isocyanurate groups, iminooxadiazinedione groups, uretdione

groups and allophanate groups, and the mole ratio of uretdione groups relative to allophanate groups (uretdione groups / allophanate groups) are calculated.

Isocyanurate groups: (integral value near 148.6 ppm) ÷ 3
Iminooxadiazinedione groups: (integral value near 135.5 ppm) ÷ 1
Allophanate groups: (integral value near 154 ppm) ÷ 1
Uretdione structures: (integral value near 157 ppm) ÷ 2

(Method for Producing Polyisocyanate Compounds)

(1) Method for Producing Polyisocyanate Containing an Isocyanurate Group

There are no particular limitations on the method for producing polyisocyanate containing an isocyanurate group, and one example is a method in which a diisocyanate is subjected to an isocyanuration reaction using a catalyst or the like, the reaction is terminated once a prescribed conversion rate has been achieved, and any unreacted diisocyanate is then removed.

There are no particular limitations on the catalyst used for the isocyanuration reaction, but catalysts having basic properties are preferable, and specific examples thereof include hydroxides and weak organic acid salts of tetraalkylammonium, hydroxides and weak organic acid salts of hydroxyalkylammonium, alkali metal salts of alkylcarboxylic acids, metal alcoholates, aminosilyl group-containing compounds, Mannich bases, mixtures of a tertiary amine and an epoxy compound, and phosphorus-based compounds.

Examples of the tetraalkylammonium include tetramethylammonium and tetraethylammonium.

Examples of the weak organic acids include acetic acid and caprylic acid. Examples of the hydroxyalkylammonium include trimethylhydroxypropylammonium, trimethylhydroxyethylammonium, triethylhydroxypropylammonium and triethylhydroxyethylammonium.

Examples of the alkylcarboxylic acids include acetic acid, caproic acid, octylic acid and myristic acid.

Examples of the metals that constitute the alkali metal salts include tin, zinc and lead.

Examples of the metal alcoholates include sodium alcoholates and potassium alcoholates.

Examples of the aminosilyl group-containing compounds include hexamethyldisilazane.

Examples of the phosphorus-based compounds include tributylphosphine.

The used amount of these catalysts is preferably 10 ppm to 1.0% relative to the total mass of raw material diisocyanates (and alcohol, as needed). Further, in order to terminate the isocyanuration reaction, the catalyst may be inactivated by adding an acidic substance that neutralizes the catalyst, or by thermal degradation or chemical degradation. Examples of acidic substances that neutralize the catalyst include phosphoric acid and acidic phosphate esters.

The yield of the polyisocyanate generally tends to be 10% by mass to 70% by mass, and is preferably 35% by mass to 60% by mass. Polyisocyanates obtained at a higher yield tend to have a higher viscosity. The yield can be calculated from the ratio of the mass of the obtained polyisocyanate relative to the total mass of raw material components.

Although there are no particular limitations on the reaction temperature of the isocyanuration reaction, the temperature is preferably 50°C to 200°C, and more preferably 50°C to 150°C. By ensuring that the reaction temperature is the aforementioned lower limit or more, the reaction tends to proceed more readily, whereas by ensuring that the reaction temperature is the aforementioned upper limit or less, side reactions that can cause coloration tend to be better suppressed.

Following completion of the isocyanuration reaction, the unreacted diisocyanate is preferably removed by thin film evaporation or extraction or the like. Even in those cases where the polyisocyanate contains unreacted diisocyanate, the amount of diisocyanate relative to the total mass of the polyisocyanate is preferably 3.0% by mass or less, more preferably 1.0% by mass or less, and even more preferably 0.5% by mass or less. By ensuring that the residual unreacted diisocyanate concentration falls within the aforementioned range, the curability tends to be more superior.

Following completion of the isocyanuration reaction, the unreacted diisocyanate is preferably removed by thin film evaporation or extraction or the like. Even in those cases where the polyisocyanate contains unreacted diisocyanate, the amount of diisocyanate relative to the total mass of the polyisocyanate is preferably 3.0% by mass or less, more preferably 1.0% by mass or less, and even more preferably 0.5% by mass or less. By ensuring that the residual unreacted diisocyanate concentration falls within the aforementioned range, the curability tends to be more superior.

The residual unreacted diisocyanate concentration can be measured by gas chromatography analysis.

(2) Method for Producing Polyisocyanate Containing an Allophanate Group

One example of a method for producing a polyisocyanate containing an allophanate group involves adding an

alcohol to a diisocyanate and then using an allophanation reaction catalyst.

The alcohol used in the formation of the allophanate group is preferably an alcohol composed solely of carbon, hydrogen and oxygen.

Specific examples of the alcohol include, but are not limited to, monoalcohols and dialcohols. One of these alcohols may be used alone, or a combination of at least two thereof may be used.

Examples of the monoalcohols include methanol, ethanol, propanol, butanol, pentanol, hexanol, heptanol, octanol and nonanol.

Examples of the dialcohols include ethylene glycol, 1,3-butanediol, neopentyl glycol and 2-ethylhexanediol.

Among these compounds, the alcohol is preferably a monoalcohol, and more preferably a monoalcohol having a molecular weight of not more than 200.

The mole ratio of isocyanate groups in the diisocyanate relative to hydroxyl groups in the alcohol is preferably 10/1 to 1,000/1, and more preferably 100/1 to 1,000/1. By ensuring that this mole ratio is the aforementioned lower limit or more, the average number of isocyanate groups (average number of functional groups) can be more satisfactorily ensured, whereas by ensuring that the mole ratio is the aforementioned upper limit or less, the effect of producing superior surface hardness is exhibited.

There are no particular limitations on the allophanation reaction catalyst, and examples thereof include alkylcarboxylate salts of tin, lead, zinc, bismuth, zirconium and zirconyl.

Examples of the alkylcarboxylate salts of tin (organotin compounds) include tin 2-ethylhexanoate and dibutyltin dilaurate.

Examples of the alkylcarboxylate salts of lead (organolead compounds) include lead 2-ethylhexanoate.

Examples of the alkylcarboxylate salts of zinc (organozinc compounds) include zinc 2-ethylhexanoate.

Examples of the alkylcarboxylate salts of bismuth include bismuth 2-ethylhexanoate.

Examples of the alkylcarboxylate salts of zirconium include zirconium 2-ethylhexanoate.

Examples of the alkylcarboxylate salts of zirconyl include zirconyl 2-ethylhexanoate.

One of these catalysts may be used alone, or a combination of at least two thereof may be used.

Further, the isocyanuration reaction catalysts described above may also function as allophanation reaction catalysts. In those cases where the allophanation reaction is conducted using an isocyanuration reaction catalyst described above, an isocyanurate type polyisocyanate is of course also produced.

Among them, conducting an allophanation reaction and an isocyanuration reaction using an isocyanuration reaction catalyst described above as the allophanation reaction catalyst is preferable in terms of achieving economic production.

The upper limit of the used amount of the allophanation reaction catalyst described above, relative to the mass of charged diisocyanates, is preferably 10,000 ppm by mass, more preferably 1,000 ppm by mass, and even more preferably 500 ppm by mass. On the other hand, although there are no particular limitations on the lower limit of the used amount of the allophanation reaction catalyst, the lower limit may, for example, be 10 ppm by mass.

Further, the lower limit of the allophanation reaction temperature is preferably 60°C, more preferably 70°C, even more preferably 80°C, and particularly preferably 90°C. On the other hand, the upper limit of the allophanation reaction temperature is preferably 160°C, more preferably 155°C, even more preferably 150°C, and particularly preferably 145°C.

In other words, the allophanation reaction temperature is preferably 60°C to 160°C, more preferably 70°C to 155°C, even more preferably 80°C to 150°C, and particularly preferably 90°C to 145°C.

By ensuring that the allophanation reaction temperature is the aforementioned lower limit or more, the reaction rate is able to be increased further. Further, by ensuring that the allophanation reaction temperature is the aforementioned upper limit or less, changes in characteristics of the polyisocyanate such as coloration tend to be more effectively suppressed.

The lower limit of the allophanation reaction time is preferably 0.2 hours, more preferably 0.4 hours, even more preferably 0.6 hours, particularly preferably 0.8 hours, and most preferably 1 hour. On the other hand, the upper limit of the allophanation reaction time is preferably 8 hours, more preferably 6 hours, even more preferably 4 hours, particularly preferably 3 hours, and most preferably 2 hours.

In other words, the allophanation reaction time is preferably 0.2 hours to 8 hours, more preferably 0.4 hours to 6 hours, even more preferably 0.6 hours to 4 hours, particularly preferably 0.8 hours to 3 hours, and most preferably 1 hour to 2 hours.

By ensuring that the allophanate reaction time is the aforementioned lower limit or more, the viscosity of the polyisocyanate can be kept lower, whereas by ensuring that the allophanate reaction time is the aforementioned upper limit or less, changes in characteristics of the polyisocyanate such as coloration tend to be more effectively suppressed.

When the desired yield is reached, an inactivation agent against the allophanation reaction catalyst such as phosphoric acid or methyl paratoluenesulfonate is added to terminate the allophanation reaction.

In the polyisocyanate, the mole ratio of allophanate groups relative to isocyanurate groups (hereinafter, may be referred to as "allophanate groups / isocyanurate groups") is preferably 0.50 or less, from the viewpoint of increasing the

crosslinking. The mole ratio of allophanate groups / isocyanurate groups can be measured by $^{13}C$-NMR.

(3) Method for Producing Polyisocyanate Containing an Uretdione Group

Examples of methods for producing a polyisocyanate containing an uretdione group include methods that use a uretdionization reaction catalyst.

Examples of specific compounds as the uretdionization reaction catalyst mentioned above include, but are not limited to, tertiary phosphines, including: trialkylphosphines such as tri-n-butylphosphine and tri-n-octylphosphine; tris(dialkylamino)phosphines such as tris(dimethylamino)phosphine; and cycloalkylphosphines such as cyclohexyl-di-n-hexylphosphine.

Many of these compounds also simultaneously promote the isocyanuration reaction, thereby producing isocyanurate group-containing polyisocyanates in addition to the uretdione group-containing polyisocyanates.

When the desired yield is reached, an inactivation agent against the uretdionization reaction catalyst such as phosphoric acid or methyl paratoluenesulfonate is added to terminate the uretdionization reaction.

The aforementioned catalyst is used in an amount which, relative to the mass of charged diisocyanate, is preferably 10 ppm by mass to 10,000 ppm by mass, more preferably 10 ppm by mass to 1,000 ppm by mass, and even more preferably 10 ppm by mass to 500 ppm by mass.

The uretdionization reaction temperature is preferably 20°C to 120°C. The lower limit of the reaction temperature is more preferably 25°C, even more preferably 30°C, and still more preferably 35°C. The upper limit of the reaction temperature is more preferably 110°C, even more preferably 100°C, and still more preferably 90°C. By ensuring that the uretdionization reaction temperature is the aforementioned upper limit or less, changes in characteristics such as coloration tend to be more effectively suppressed.

Further, uretdione groups can also be obtained without using the uretdionization reaction catalyst described above, by heating the diisocyanate. The heating temperature is preferably 130°C to 180°C. The lower limit of the heating temperature is more preferably 140°C, even more preferably 145°C, still more preferably 150°C, and yet still more preferably 155°C. The upper limit of the heating temperature is more preferably 170°C, even more preferably 165°C, still more preferably 162°C, and yet still more preferably 160°C.

Further, the heating time is preferably 0.2 hours to 8.0 hours. The lower limit of the heating time is more preferably 0.4 hours, even more preferably 0.6 hours, still more preferably 0.8 hours, and yet still more preferably 1.0 hours. The upper limit of the heating time is more preferably 6.0 hours, even more preferably 4.0 hours, still more preferably 3.0 hours and yet still more preferably 2.0 hours. By ensuring that the heating time is the aforementioned lower limit or more, a lower viscosity tends to be more easily achieved, whereas by ensuring that the heating time is the aforementioned upper limit or less, coloration of the polyisocyanate itself tends to be able to be better suppressed.

In those cases where the polyisocyanate composition of the present embodiment is obtained without using an uretdionization catalyst, it is preferable from the viewpoints of reducing the concentration of unreacted diisocyanate, reducing variation in the molecular weight of the obtained polyisocyanate composition following storage, and reducing yellowing upon high-temperature baking, that the unreacted diisocyanate be removed after completion of the uretdionization reaction conducted by only heating and the isocyanuration reaction described above.

(Physical Properties of the Polyisocyanate Compound)

From the viewpoints of improving the dispersibility and pot life of the coating composition, and improving the external appearance and water resistance upon formation of a coating film, the viscosity of the polyisocyanate compound at 25°C is preferably 300 mPa·s to 5,000 mPa·s.

From the viewpoints of improving the water resistance and weather resistance of the formed coating film, the lower limit of the viscosity is more preferably 350 mPa·s, and even more preferably 450 mPa·s. On the other hand, from the viewpoints of improving the dispersibility and pot life, the upper limit of the viscosity is more preferably 4,000 mPa·s, and even more preferably 3,000 mPa·s.

The viscosity of the polyisocyanate compound can be measured, for example, at 25°C with an E-type viscometer (manufactured by Tokimec Inc.) using a standard rotor (1°34' × R24).

The isocyanate group content (NCO%) of the polyisocyanate compound, in a state where unreacted aliphatic diisocyanate has been removed, is preferably 18% by mass to 25% by mass, more preferably 19% by mass to 24% by mass, and even more preferably 20% by mass to 24% by mass.

By ensuring that the isocyanate group content is the aforementioned lower limit or more, the water resistance, chemical resistance and weather resistance upon formation of a coating film can be further improved. On the other hand, by ensuring that the isocyanate group content is the aforementioned upper limit or less, the dispersibility and pot life of the coating composition can be further improved, and the external appearance upon formation of a coating film is more favorable.

The isocyanate group content (NCO%) of the polyisocyanate compound can be measured using the titration method described in the following examples.

From the viewpoint of the solvent resistance of the coating film, the number average molecular weight of the polyisocyanate compound is preferably 450 to 4,000, more preferably 500 to 3,500, and even more preferably 550 to 3,000.

The number average molecular weight can be measured, for example, using gel permeation chromatography (GPC).

From the viewpoint of the solvent resistance of the coating film and the isocyanate group retention rate, the average functional group number of the polyisocyanate compound is preferably 1.8 to 6.2, more preferably 2.0 to 5.6, and even more preferably 2.5 to 4.6.

The average functional group number is the statistical number of isocyanate functional groups per molecule of the polyisocyanate compound, and can be calculated from the number average molecular weight (Mn) and the isocyanate group content (NCO%) of the polyisocyanate compound using the following equation.

$$[\text{Average Functional Group Number}] = \text{Mn} \times \text{NCO\%} / 4{,}200$$

[Ionic Compound and Nonionic Compound]

The ionic compound used as a raw material of the ionic polyisocyanate compound is a compound having an ionic functional group.

The nonionic compound used as a raw material of the nonionic polyisocyanate compound is a compound having a nonionic functional group.

Hereinafter, the ionic compound and the nonionic compound may be jointly referred to as hydrophilic compounds. Further, the ionic functional group and the nonionic functional group may be jointly referred to as hydrophilic groups.

In order to react with one isocyanate group, each hydrophilic compound preferably has at least one active hydrogen group capable of reacting with an isocyanate group of the polyisocyanate compound per molecule of the hydrophilic compound. Specific examples of the active hydrogen group include a hydroxyl group, mercapto group, carboxylic acid group, amino group and thiol group.

Examples of the ionic compound include anionic compounds and cationic compounds. The nonionic compound may also be referred to as a non-ionic compound. One of these hydrophilic compounds may be used alone, or a combination of at least two thereof may be used.

(Anionic Compound)

There are no particular limitations on the anionic compound, and examples thereof include compounds containing a carboxylic acid group, compounds containing a phosphoric acid group, and compounds containing a sulfonic acid group.

There are no particular limitations on the compounds containing a carboxylic acid group, and examples thereof include carboxylic acids containing a hydroxyl group, including monohydroxycarboxylic acids such as 1-hydroxyacetic acid, 3-hydroxypropanoic acid, 12-hydroxy-9-octadecanoic acid, hydroxypivalic acid and lactic acid; and polyhydroxycarboxylic acids such as dimethylolacetic acid, 2,2-dimethylolbutyric acid, 2,2-dimethylolpentanoic acid, dihydroxysuccinic acid and dimethylolpropionic acid. Among these, hydroxypivalic acid or dimethylolpropionic acid is preferable.

There are no particular limitations on the compounds containing a phosphoric acid group, and examples thereof include acidic phosphate esters, acidic phosphite esters, acidic hypophosphite esters, and specific polyether phosphonates (such as products commercially available under the trade name of RHODAFAC (registered trademark) (manufactured by Solvay Nicca Ltd.)). Among these, acidic phosphate esters are preferable.

From the viewpoint of the dispersibility in water, the phosphorus atom content of the polyisocyanate composition, relative to the total mass (100% by mass) of the polyisocyanate composition, is preferably at least 0.03% by mass, more preferably at least 0.05% by mass, and even more preferably at least 0.1% by mass. By ensuring that the phosphorus atom content is at least 0.03% by mass, better dispersibility in water tends to be achieved as a result of a reduction in surface tension.

Further, from the viewpoint of the physical properties of the coating film, the phosphorus atom content of the polyisocyanate composition, relative to the total mass (100% by mass) of the polyisocyanate composition, is preferably 6.0% by mass or less, more preferably 3.0% by mass or less, and even more preferably 1.0% by mass or less. By ensuring that the phosphorus atom content is the aforementioned upper limit or less, the physical properties of the coating film tend

to improve due to the increased number of isocyanate groups used in crosslinking.

Examples of the method for controlling the phosphorus atom content within the aforementioned range include, but are not limited to, methods in which the blend ratio between the aforementioned compound containing a phosphoric acid group and the raw material polyisocyanate compound is adjusted. Further, the phosphorus atom content can be measured by inductively coupled plasma atomic emission spectroscopy (ICP-AES).

There are no particular limitations on the compounds containing a sulfonic acid group, and examples thereof include sulfonic acids containing a hydroxyl group and sulfonic acids containing an amino group.

From the viewpoints of the dispersibility and external appearance, the sulfonic acid containing a hydroxyl group is preferably a compound of general formula (II) shown below (hereinafter, may be referred to as a "hydroxyl group-containing sulfonic acid (II)").

$$HO\text{-}R^{21}\text{-}SO_3H \qquad (II)$$

In general formula (II), $R^{21}$ is a hydrocarbon group having 1 to 10 carbon atoms that may contain at least one moiety selected from the group consisting of a hydroxyl group, an ether linkage (-O-), an ester linkage (-COO-), a carbonyl group (-C(=O)-) and an imino group (-C(=NR)- or -C-(NR)-C-). $R^{21}$ may contain a cyclic structure. The cyclic structure is an aromatic ring, a 5-membered or 6-membered ring containing two nitrogen atoms, or a 5-membered or 6-membered ring containing a nitrogen atom and an oxygen atom.

The hydrocarbon group having 1 to 10 carbon atoms as $R^{21}$ may be a divalent aliphatic hydrocarbon group having 1 to 10 carbon atoms, or a divalent aromatic hydrocarbon group having 6 to 10 carbon atoms. The divalent aliphatic hydrocarbon group having 1 to 10 carbon atoms is preferably a chained alkylene group having 1 to 6 carbon atoms. The chained alkylene group having 1 to 6 carbon atoms may include a cyclic structure within a part of the chained alkylene group. The alkylene group having 1 to 6 carbon atoms may be either linear or branched.

Among them, $R^{21}$ is preferably a chained alkylene group having 1 to 6 carbon atoms, a divalent aromatic hydrocarbon group (arylene group) having 6 to 10 carbon atoms, a divalent alkylene group having 1 to 10 carbon atoms that contains an aromatic ring, a divalent alkylene group having 1 to 6 carbon atoms that contains a 5-membered or 6-membered ring containing two nitrogen atoms, or a divalent alkylene group having 1 to 6 carbon atoms that contains a 5-membered or 6-membered ring containing a nitrogen atom and an oxygen atom.

Preferable examples of the hydroxyl group-containing sulfonic acid (II) include 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, hydroxybenzenesulfonic acid, hydroxy(methyl)benzenesulfonic acid, 4-(2-hydroxyethyl)-1-piperazineethanesulfonic acid, 4-(2-hydroxyethyl)-1-piperazinepropanesulfonic acid, 2-hydroxy-3-morpholinopropanesulfonic acid, and specific polyether sulfonates (for example, compounds commercially available under the trade name of Tegomer (registered trademark) (manufactured by Th. Goldschmidt AG, Essen, Germany)).

Among these, the sulfonic acid containing a hydroxyl group is preferably at least one compound selected from the group consisting of 2-hydroxyethanesulfonic acid, 3-hydroxypropanesulfonic acid, hydroxybenzenesulfonic acid and hydroxy(methyl)benzenesulfonic acid.

Examples of the sulfonic acid containing an amino group include compounds of general formula (III) shown below (hereinafter, may be referred to as an "amino group-containing sulfonic acid (III)").

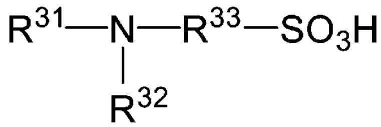

( III )

In general formula (III), $R^{31}$ and $R^{32}$ are each independently a hydrogen atom or a hydrocarbon group having 1 to 12 carbon atoms which may contain a hydroxyl group. At least one of $R^{31}$ and $R^{32}$ is a hydrogen atom. $R^{33}$ is a hydrocarbon group having 1 to 12 carbon atoms which may contain a hydroxyl group.

In general formula (III), $R^{31}$ and $R^{32}$ each independently represents a hydrogen atom or a hydrocarbon group having 1 to 12 carbon atoms which may contain a hydroxyl group. $R^{31}$ and $R^{32}$ may be identical to or different from each other. At least one of $R^{31}$ and $R^{32}$ is a hydrogen atom. In other words, in those cases where $R^{31}$ is a hydrocarbon group having 1 to 12 carbon atoms which may contain a hydroxyl group, $R^{32}$ is a hydrogen atom. Further, in those cases where $R^{32}$ is a hydrocarbon group having 1 to 12 carbon atoms which may contain a hydroxyl group, $R^{31}$ is a hydrogen atom. Furthermore, $R^{31}$ and $R^{32}$ may both be hydrogen atoms.

The hydrocarbon group having 1 to 12 carbon atoms may be a monovalent aliphatic hydrocarbon group having 1 to 12 carbon atoms, or a monovalent aromatic hydrocarbon group having 6 to 12 carbon atoms. The monovalent aliphatic hydrocarbon group having 1 to 12 carbon atoms is preferably a chained alkyl group having 1 to 6 carbon atoms, or a cyclic alkyl group having 3 to 6 carbon atoms. The chained alkyl group having 1 to 6 carbon atoms may be either linear or

branched.

Among them, it is preferable that each of $R^{31}$ and $R^{32}$ is a hydrogen atom, a chained alkyl group having 1 to 6 carbon atoms, or a cyclic alkyl group having 3 to 6 carbon atoms.

$R^{33}$ is a hydrocarbon group having 1 to 12 carbon atoms which may contain a hydroxyl group.

The hydrocarbon group having 1 to 12 carbon atoms may be a divalent aliphatic hydrocarbon group having 1 to 12 carbon atoms, or a divalent aromatic hydrocarbon group having 6 to 12 carbon atoms. The divalent aliphatic hydrocarbon group having 1 to 12 carbon atoms is preferably a chained alkylene group having 1 to 12 carbon atoms. The chained alkylene group having 1 to 12 carbon atoms may be either linear or branched.

Among them, $R^{33}$ is preferably a divalent chained alkylene group having 1 to 6 carbon atoms, or a divalent aromatic hydrocarbon group (arylene group) having 6 to 10 carbon atoms.

Preferable examples of the amino group-containing sulfonic acid **(III)** include 2-aminoethanesulfonic acid, 3-aminopropanesulfonic acid, 2-methylaminoethanesulfonic acid, 3-methylaminopropanesulfonic acid, 2-cyclohexylaminoethanesulfonic acid, 3-cyclohexylaminopropanesulfonic acid, 3-cyclohexylaminoisobutylsulfonic acid, 4-cyclohexylaminobutanesulfonic acid, 2-cyclohexylmethylaminoethanesulfonic acid, 3-cyclohexylmethylaminopropanesulfonic acid, 3-cyclohexylmethylaminoisobutylsulfonic acid, 4-cyclohexylmethylaminobutanesulfonic acid, 2-methylcyclohexylaminoethanesulfonic acid, 3-methylcyclohexylaminopropanesulfonic acid, 3-methylcyclohexylaminoisobutylsulfonic acid, 4-methylcyclohexylaminobutanesulfonic acid, 2-dimethylcyclohexylaminoethanesulfonic acid, 3-dimethylcyclohexylaminopropanesulfonic acid, 3-dimethylcyclohexylaminoisobutylsulfonic acid, 4-dimethylcyclohexylaminobutanesulfonic acid, 2-trimethylcyclohexylaminoethanesulfonic acid, 3-trimethylcyclohexylaminopropanesulfonic acid, 3-trimethylcyclohexylaminoisobutylsulfonic acid, 4-trimethylcyclohexylaminobutanesulfonic acid, 2-aminobenzenesulfonic acid, 3-aminobenzenesulfonic acid, 4-aminobenzenesulfonic acid, 2-(methylamino)benzenesulfonic acid, 3-(methylamino)benzenesulfonic acid, 4-(methylamino)benzenesulfonic acid, amino-methylbenzenesulfonic acid, amino-dimethylbenzenesulfonic acid, and aminonaphthalenesulfonic acid.

Among these, the sulfonic acid containing an amino group is preferably at least one compound selected from the group consisting of 2-cyclohexylaminoethanesulfonic acid, 3-cyclohexylaminopropanesulfonic acid, 4-cyclohexylaminobutanesulfonic acid, 3-cyclohexylmethylaminopropanesulfonic acid, 3-(p-methylcyclohexylamino)propanesulfonic acid, 3-(3,3,5-trimethylcyclohexylamino)propanesulfonic acid, 4-(p-methylcyclohexylamino)butanesulfonic acid, 2-aminobenzenesulfonic acid, 2-amino-5-methylbenzenesulfonic acid, 2-amino-3,5-dimethylbenzenesulfonic acid, 5-amino-2-methylbenzenesulfonic acid (4-aminotoluene-2-sulfonic acid), 4-amino-2-methylbenzenesulfonic acid (5-aminotoluene-2-sulfonic acid) and 2-aminonaphthalene-4-sulfonic acid.

The acidic group such as the carboxylic acid group, phosphoric acid group or sulfonic acid group of the anionic compound is preferably neutralized with an inorganic base or an amine compound or the like.

Examples of the inorganic base include alkali metals such as lithium, sodium, potassium, rubidium and cesium, alkaline earth metals such as magnesium, calcium, strontium and barium, other metals such as manganese, iron, cobalt, nickel, copper, zinc, silver, cadmium, lead and aluminum, and ammonia.

Examples of the amine compounds include:

linear tertiary amines such as trimethylamine, triethylamine, tripropylamine, tributylamine, trioctylamine, trilaurylamine, tritridecylamine and tristearylamine;

branched tertiary amines such as triisopropylamine, triisobutylamine, tri-2-ethylhexylamine and tri-branched-tridecylamine;

tertiary amines having mixed hydrocarbon groups such as N,N-dimethylethylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl-(branched)-tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-diisopropylbutylamine, and N,N-diisopropyl-2-ethylhexylamine;

alicyclic tertiary amines such as N,N-dimethylcyclohexylamine, N,N-diethylbenzylamine, N,N-diethylcyclohexylamine, N,N-dicyclohexylmethylamine, N,N-dicyclohexylethylamine, and tricyclohexylamine;

tertiary amines having an aromatic ring substituent such as N,N-dimethylbenzylamine, N,N-diethylbenzylamine, N,N-dibenzylmethylamine, tribenzylamine, N,N-dimethyl-4-methylbenzylamine, N,N-dimethylphenylamine, N,N-diethylphenylamine, and N,N-diphenylmethylamine; and

cyclic amines such as N-methylpyrrolidine, N-ethylpyrrolidine, N-propylpyrrolidine, N-butylpyrrolidine, N-methylpiperidine, N-ethylpiperidine, N-propylpiperidine, N-butylpiperidine, N-methylmorpholine, N-ethylmorpholine, N-propylmorpholine, N-butylmorpholine, N-sec-butylmorpholine, N-tert-butylmorpholine, N-isobutylmorpholine, and quinuclidine.

One of these amine compounds may be used alone, or a combination of at least two thereof may be used.

Among them, tertiary amines having 5 to 30 carbon atoms are preferable, and specific examples thereof include triethylamine, tripropylamine, tributylamine, trioctylamine, trilaurylamine, tridecylamine, triisopropylamine, triisobutylamine, tri-2-ethylhexylamine, tri-branched-tridecylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl-(branched)-tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-dimethylcyclohexylamine, N,N-diethylcyclohexylamine, N,N-dicyclohexylmethylamine, N,N-dicyclohexylethylamine, N,N-dimethylbenzylamine, N,N-diethylbenzylamine, N,N-dibenzylmethylamine, tribenzylamine, N,N-dimethylphenylamine, N,N-diethylphenylamine, N,N-diphenylmethylamine, N-methylpiperidine, N-ethylpiperidine, N-methylmorpholine, N-ethylmorpholine, quinuclidine, pyridine and quinoline. One of these preferable organic amine compounds may be used alone, or a combination of at least two thereof may be used.

Although the polyisocyanate compound is modified with a hydrophilic compound (thereby introducing hydrophilic groups derived from the hydrophilic compound into the polyisocyanate compound) in order to disperse the polyisocyanate compound in water, any deterioration in the physical properties of the coating film (such as hardness, water resistance and solvent resistance) tends to be able to be suppressed by ensuring that the proportion of modified groups does not become excessively high. Because the anionic compound has a high degree of emulsifying power, a superior emulsification effect can be exhibited with a small amount of the anionic compound, thereby making it easier to disperse the polyisocyanate compound in water.

From the viewpoint of the dispersibility in water, the lower limit of the sulfur atom content in the polyisocyanate composition, relative to the total mass (100% by mass) of the polyisocyanate composition, is preferably 0.03% by mass, more preferably 0.05% by mass, and even more preferably 0.08% by mass. By ensuring that the sulfur atom content is the aforementioned lower limit or more, better dispersibility in water tends to be achieved as a result of a reduction in surface tension.

Further, from the viewpoint of the physical properties of the coating film, the upper limit of the sulfur atom content of the polyisocyanate composition, relative to the total mass (100% by mass) of the polyisocyanate composition, is preferably 3.0% by mass, more preferably 2.5% by mass, and even more preferably 2.0% by mass. By ensuring that the sulfur atom content is the aforementioned upper limit or less, the physical properties of the coating film tend to be improved due to the increased number of isocyanate groups used in crosslinking.

In other words, the sulfur atom content of the polyisocyanate composition relative to the total mass (100% by mass) of the polyisocyanate composition is preferably 0.03% by mass to 3.0% by mass, more preferably 0.05% by mass to 2.5% by mass, and even more preferably 0.08% by mass to 2.0% by mass.

Examples of the method for controlling the sulfur atom content within the aforementioned range include, but are not limited to, methods in which the blend ratio between the aforementioned compound containing a sulfonic acid group and the raw material polyisocyanate compound is adjusted. Further, the sulfur atom content can be measured by ion chromatography (IC).

Examples of the method for reacting the raw material polyisocyanate compound and the aforementioned anionic compound include, but are not limited to, methods in which the terminal isocyanate groups of the polyisocyanate as a raw material polyisocyanate compound are reacted with active hydrogen groups of the anionic compound.

(Method for Producing Sulfonic Acid Amine Salt)

In the case where the aforementioned compound containing a sulfonic acid group forms a salt with the aforementioned amine compound, namely, in the case of an amine salt of a sulfonic acid, the amine salt can be obtained, for example, by mixing the compound containing the sulfonic acid group and the amine compound to allow a neutralization reaction to proceed.

The neutralization reaction may be conducted in advance, prior to the reaction with the polyisocyanate compound. Alternatively, the neutralization reaction may be conducted simultaneously with the reaction with the polyisocyanate compound. Alternatively, the polyisocyanate compound and the compound containing a sulfonic acid group may first be reacted, and the amine compound then added to conduct the neutralization reaction.

**In** those cases where the active hydrogen group is a hydroxyl group, the aforementioned neutralization reaction is preferably conducted prior to the reaction with the polyisocyanate compound. Further, in those cases where the active hydrogen group is an amino group, it is preferable that either the neutralization reaction be conducted simultaneously with the reaction with the polyisocyanate compound, or that the polyisocyanate compound and the sulfonic acid containing an active hydrogen group be first reacted, and the amine compound be then added to conduct the neutralization reaction.

Furthermore, in those cases where the active hydrogen group is a hydroxyl group, the mixing ratio in the neutralization reaction between the sulfonic acid containing the hydroxyl group and the amine compound preferably yields a mole ratio of the amine compound relative to the sulfonic acid containing the hydroxyl group (mole ratio of amine compound / sulfonic acid containing the hydroxyl group) of 0.5 to 2.0, and more preferably 0.8 to 1.5.

In those cases where the neutralization reaction is conducted in advance, the temperature and reaction time may be determined appropriately in accordance with the reaction progression, but typically, the temperature is preferably about 0°C to 100°C, and the mixing time is preferably about 10 minutes to 24 hours.

The solvent used to prepare an amine salt of the aforementioned compound containing a sulfonic acid group is preferably water or a hydrophilic solvent. There are no particular limitations on the hydrophilic solvent, and examples thereof include alcohols, ether alcohols, ketones, and amide-based solvents. One of these solvents may be used alone, or a mixture of solvents may be used.

Examples of the alcohols include methanol, ethanol, propanol, butanol, and isopropanol.

Examples of the ether alcohols include ethylene glycol monomethyl ether, ethylene glycol monoethyl ether, ethylene glycol monobutyl ether, diethylene glycol monoethyl ether, diethylene glycol monobutyl ether, propylene glycol monomethyl ether, propylene glycol monoethyl ether, and dipropylene glycol monomethyl ether.

Examples of the ketones include acetone, methyl ethyl ketone, and methyl isobutyl ketone.

Examples of the amide-based solvents include N,N-dimethylformamide and N,N-dimethylacetamide.

Following the neutralization reaction, water or the hydrophilic solvent is preferably removed.

(Cationic Compound)

There are no particular limitations on the cationic compound, and examples thereof include amine compounds containing a hydroxyl group, such as dimethylethanolamine, diethylethanolamine, diethanolamine, methyldiethanolamine, N,N-dimethylaminohexanol, N,N-dimethylaminoethoxyethanol, N,N-dimethylaminoethoxyethoxyethanol, N,N,N'-trimethylaminoethylethanolamine, and N-methyl-N-(dimethylaminopropyl)aminoethanol. Among them, dimethylethanolamine, diethylethanolamine, N,N-dimethylaminohexanol, N,N-dimethylaminoethoxyethanol or N,N-dimethylaminoethoxyethoxyethanol is preferable. The tertiary amino group (cationic hydrophilic group) that is derived from the aforementioned cationic compound and is introduced into the polyisocyanate may also be quaternized with dimethyl sulfate or diethyl sulfate or the like.

The tertiary amino group of the cationic compound is preferably neutralized with a compound containing an anionic group. There are no particular limitations on this anionic group, and examples thereof include a carboxyl group, sulfonic acid group, phosphoric acid group, halogen group, and sulfuric acid group.

There are no particular limitations on the compound containing a carboxyl group, and examples thereof include formic acid, acetic acid, propionic acid, butyric acid, and lactic acid.

There are no particular limitations on the compound containing a sulfonic acid group, and examples thereof include ethanesulfonic acid.

There are no particular limitations on the compound containing a phosphoric acid group, and examples thereof include phosphoric acid and acidic phosphate esters.

There are no particular limitations on the compound containing a halogen group, and examples thereof include hydrochloric acid.

There are no particular limitations on the compound containing a sulfuric acid group, and examples thereof include sulfuric acid.

Among them, compounds containing a carboxyl group are preferable, and acetic acid, propionic acid or butyric acid is more preferable.

From the viewpoint of the physical properties of the coating film, the amount of structural units derived from the ionic compound, namely, the mass fraction of the ionic compound bonded to the ionic polyisocyanate compound, relative to the total mass of the polyisocyanate composition, is preferably 1.0% by mass to 40.0% by mass, more preferably 5.0% by mass to 15.0% by mass, even more preferably 10.0% by mass to 13.5% by mass, and particularly preferably 11.0% by mass to 13.0% by mass. By ensuring that the amount of the ionic compound falls within the above-mentioned range, the number of isocyanate groups used in crosslinking increases, and the physical properties (external appearance, water resistance and hardness) of the coating film tend to be more favorable.

The amount of structural units derived from the ionic compound may be measured as the modification rate by the ionic compound in the ionic polyisocyanate (A) using the liquid chromatography - mass spectrometry (LC-MS) method mentioned above in relation to the mass ratio (a2)/(b2).

(Nonionic Compound)

The nonionic compound is a polyalkylene glycol alkyl ether having a structure of general formula (I) shown below.

$$HO-\left(R^{11}O\right)_{n11}-R^{12} \qquad (I)$$

(In general formula (I), $R^{11}$ is an alkylene group having 1 to 4 carbon atoms, $R^{12}$ is an alkyl group having 1 to 4 carbon atoms, and n11 is 4.0 to 20.)

A polyalkylene glycol alkyl ether is not composed of a single component, but is rather an aggregate of substances having different values of the polymerization degree indicated by n11 (hereinafter, may be referred to as the "polymerization degree n11" or simply "n11"). Accordingly, the polymerization degree n represents an average value.

When the polyisocyanate is blended with the water-based main agent, an increase in viscosity upon mixing with the main agent is often problematic. When the viscosity increase is large, dispersing the polyisocyanate uniformly in the main agent becomes difficult, which tends to lead to a deterioration in the physical properties of the coating film.

Accordingly, from the viewpoints of the dispersibility in water and the dispersibility in the main agent, n11 is 4.0 to 20, preferably 4.0 to 16, and more preferably 4.0 to 12. By ensuring that n11 is the aforementioned lower limit or more, the emulsifying power can be increased, as a result of which the dispersibility tends to be improved, whereas by ensuring that n11 is the aforementioned upper limit or less, viscosity increases can be prevented, as a result of which dispersion tends to be more easily achieved.

A combination of at least two polyalkylene glycol alkyl ethers having different n11 values may also be used. The n11 value of the polyalkylene glycol alkyl ether can be measured by proton nuclear magnetic resonance (NMR) spectroscopy.

In general formula (I), $R^{11}$ is an alkylene group having 1 to 4 carbon atoms from the viewpoint of imparting hydrophilicity, and is preferably an ethylene group having two carbon atoms from the viewpoint of enabling superior hydrophilicity to be imparted.

Further, $R^{12}$ is an alkyl group having 1 to 4 carbon atoms from the viewpoint of imparting hydrophilicity, and is preferably a methyl group having one carbon atom from the viewpoint of enabling superior hydrophilicity to be imparted.

Examples of the polyalkylene glycol alkyl ether include, but are not limited to, polyethylene glycol (mono)methyl ether, poly(ethylene, propylene) glycol (mono)methyl ether, and polyethylene glycol (mono)ethyl ether. Among these, polyethylene glycol (mono)methyl ether is preferable from the viewpoint of imparting hydrophilicity.

From the viewpoint of the physical properties of the coating film, the amount of structural units derived from the nonionic compound (preferably a polyalkylene glycol alkyl ether), namely, the mass fraction of the nonionic compound bonded to the nonionic polyisocyanate compound, relative to the total mass of the polyisocyanate composition, is preferably 0.1% by mass to 10.0% by mass, more preferably 0.3% by mass to 9.5% by mass, and even more preferably 0.5% by mass to 9.0% by mass. By ensuring that the amount of those portions derived from the nonionic compound falls within the above-mentioned range, the number of isocyanate groups used in crosslinking increases, and the physical properties (the external appearance, water resistance and hardness) of the coating film tend to be more favorable.

The amount of structural units derived from the nonionic compound may be measured as the modification rate by the nonionic compound in the nonionic polyisocyanate (B), using the liquid chromatography - mass spectrometry (LC-MS) method mentioned above in relation to the mass ratio (a2)/(b2).

<Other Constituent Components>

The polyisocyanate composition of the present embodiment may also include other components in addition to the ionic polyisocyanate compound (A) and the nonionic polyisocyanate compound (B). There are no particular limitations on these other components, and examples thereof include solvents, antioxidants, photostabilizers, polymerization inhibitors, surfactants, and peroxidation inhibitors.

The solvents may be hydrophilic solvents or hydrophobic solvents. One of these solvents may be used alone, or a mixture thereof may be used.

There are no particular limitations on the hydrophobic solvents, and examples thereof include mineral spirit, solvent naphtha, LAWS (Low Aromatic White Spirit), HAWS (High Aromatic White Spirit), toluene, xylene, cyclohexane, esters, ketones, and amides.

Examples of the esters include ethyl acetate and butyl acetate.

Examples of the ketones include acetone, methyl ethyl ketone, methyl isobutyl ketone, and cyclohexanone.

Examples of the amides include N,N-dimethylformamide and N,N-dimethylacetamide.

There are no particular limitations on the hydrophilic solvents, and examples thereof include alcohols, ethers, and esters of ether alcohols.

Examples of the alcohols include methanol, ethanol, propanol, isopropanol, and 2-ethylhexanol.

Examples of the ethers include diethylene glycol dimethyl ether, diethylene glycol diethyl ether, diethylene glycol dibutyl ether, and dipropylene glycol dimethyl ether.

Examples of the esters of ether alcohols include ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monoethyl ether acetate, propylene glycol monomethyl ether acetate, and dipropylene glycol monomethyl ether acetate.

In the polyisocyanate composition of the present embodiment, the amount of the solvent relative to the total mass of the polyisocyanate composition of the present embodiment is preferably 0% by mass to 90% by mass, more preferably 0% by mass to 50% by mass, and even more preferably 0% by mass to 30% by mass, from the viewpoint of the ease of dispersion.

Examples of the antioxidants and photostabilizers include the compounds listed below in (a) to (e). One of these compounds may be included alone, or a combination of at least two thereof may be included.

(a) Aliphatic, aromatic or alkyl group-substituted aromatic esters of phosphoric acid or phosphorus acid, or hypophosphorous acid derivatives.
(b) Phosphorus compounds such as phenylphosphonic acid, phenylphosphinic acid, diphenylphosphonic acid, polyphosphonate, dialkyl pentaerythritol diphosphite, and dialkyl bisphenol A diphosphite.
(c) Phenol-based derivatives (particularly hindered phenol compounds).
(d) Compounds containing sulfur such as thioether-based compounds, dithioate-based compounds, mercaptobenzimidazole-based compounds, thiocarbanilide-based compounds, and thiodipropionate esters.
(e) Tin-based compounds such as tin maleate and dibutyltin monoxide.

Examples of the polymerization inhibitors include hydroquinones, phenols, cresols, catechols, and benzoquinones. Specific examples of the polymerization inhibitors include benzoquinone, p-benzoquinone, p-toluquinone, p-xyloquinone, naphthoquinone, 2,6-dichloroquinone, hydroquinone, trimethylhydroquinone, catechol, p-tert-butylcatechol, 2,5-di-tert-butylhydroquinone, monomethylhydroquinone, p-methoxyphenol, 2,6-di-tert-butyl-p-cresol, and hydroquinone monomethyl ether. One of these compounds may be included alone, or a combination of at least two thereof may be included.

Examples of the surfactants include conventionally-known anionic surfactants, cationic surfactants and amphoteric surfactants.

In the polyisocyanate composition of the present embodiment, the total amount of antioxidants, photostabilizers, polymerization inhibitors and surfactants, relative to the total mass of the polyisocyanate composition of the embodiment, is preferably 0% by mass to 10% by mass, more preferably 0% by mass to 5% by mass, and even more preferably 0% by mass to 2% by mass.

<Method for Producing Polyisocyanate Composition>

Examples of the method for producing the polyisocyanate composition of the present embodiment include:

(1) a method in which the nonionic compound and the ionic compound are reacted to be added to a portion of the isocyanate groups in the polyisocyanate compound either simultaneously or sequentially;
(2) a method in which the ionic polyisocyanate compound (A) and the nonionic polyisocyanate compound (B) are produced separately, and then mixed in the desired ratio;
(3) a method in which the ionic polyisocyanate compound (A), the nonionic polyisocyanate compound (B) and the unmodified polyisocyanate compound (C) are produced separately, and then mixed in the desired ratio;
(4) a method in which the nonionic compound and the ionic compound are reacted either simultaneously or sequentially when the polyisocyanate compound is prepared using a diisocyanate as the raw material; and
(5) a method in which the nonionic polyisocyanate compound produced by reacting the nonionic compound with the raw material diisocyanate, and the ionic polyisocyanate compound produced by reacting the ionic compound with the raw material diisocyanate are obtained separately, and then mixed in the desired ratio.

Among the aforementioned production methods, the method (1), (2) or (3) is preferable, and the method (2) is more preferable, in terms of the simplicity of production and the ease of design of the production process.

In the reaction of the polyisocyanate compound and the hydrophilic compound, an organometallic salt, a tertiary amine-based compound, or an alkali metal alcoholate may be used as a catalyst. Examples of the metal that constitutes the organometallic salt include tin, zinc and lead. Examples of the alkali metal include sodium.

The reaction temperature of the reaction between the polyisocyanate compound and the hydrophilic compound is preferably -20°C to 150°C, and more preferably 30°C to 130°C. By ensuring that the reaction temperature is the aforementioned lower limit or more, the reactivity tends to be enhanced. Further, by ensuring that the reaction temperature is the aforementioned upper limit or less, side reactions tend to be able to be more effectively suppressed.

The hydrophilic compound is preferably reacted completely with the polyisocyanate so that no hydrophilic compound remains in an unreacted state. By ensuring that no hydrophilic compound remains, both the dispersibility in water of the polyisocyanate composition and the pot life upon formation of a coating composition tend to be improved.

In those cases where the hydrophilic compound is a sulfonic acid containing a hydroxyl group, the method for

producing the polyisocyanate composition of the present embodiment preferably includes, for example, a step (X) of mixing and reacting an amine salt of the sulfonic acid containing a hydroxyl group and the polyisocyanate.

Alternatively, the method for producing the polyisocyanate composition of the present embodiment preferably includes, for example, a step (Y) of mixing and reacting the sulfonic acid containing a hydroxyl group, the polyisocyanate, and an amine compound.

In the step (X), the amine salt of the sulfonic acid is preferably prepared in advance, and then added to the polyisocyanate. Further, in the step (Y), the sulfonic acid containing a hydroxyl group and the amine compound may be added to the polyisocyanate either simultaneously or sequentially.

Among them, the step (X) is preferably conducted, and preparing the amine salt of the sulfonic acid in advance and then adding the salt to the polyisocyanate is more preferable.

In those cases where the hydrophilic compound is a sulfonic acid containing a hydroxyl group, it is preferable that the sulfonic acid containing a hydroxyl group or the amine salt thereof and the polyisocyanate compound be mixed for the reaction between the polyisocyanate compound and the sulfonic acid containing a hydroxyl group such that the mole ratio of isocyanate groups / hydroxyl groups is 2 to 400, more preferably 5 to 200, and even more preferably 10 to 100, from the viewpoints of the pot life and dispersibility.

In those cases where the hydrophilic compound is a nonionic compound, it is preferable that the polyisocyanate compound and the nonionic compound be mixed for the reaction between the polyisocyanate compound and the nonionic compound such that the amount of the nonionic compound relative to 100.0% by mass of the polyisocyanate compound is 2.0% by mass to 50.0% by mass and more preferably 4.0% by mass to 40.0% by mass, from the viewpoints of the pot life and gloss.

In those cases where the hydrophilic compound is a polyalkylene glycol alkyl ether, it is preferable that the polyisocyanate compound and the polyalkylene glycol alkyl ether be mixed ofr the reaction between the polyisocyanate compound and the polyalkylene glycol alkyl ether such that the mole ratio of isocyanate groups / hydroxyl groups is 2 to 400, more preferably 5 to 200, and even more preferably 10 to 100, from the viewpoints of the pot life and gloss.

In the reaction between the polyisocyanate compound and the hydrophilic compound, the reaction temperature and reaction time may be determined appropriately depending on the progression of the reaction, but the reaction temperature is preferably 0°C to 150°C, and the reaction time is preferably 30 minutes to 48 hours.

Furthermore, in the reaction between the polyisocyanate compound and the hydrophilic compound, a conventionally-known catalyst may be used in some cases. There are no particular limitations on the catalyst, and examples thereof include catalysts (a) to (f) listed below. One of them may be used alone, or a mixture thereof may be used.

(a) Organotin compounds such as tin octanoate, tin 2-ethyl-1-hexanoate, tin ethyl caproate, tin laurate, tin palmitate, dibutyltin oxide, dibutyltin dichloride, dibutyltin diacetate, dibutyltin dimaleate, dibutyltin dilaurate, dioctyltin diacetate, and dioctyltin dilaurate.
(b) Organozinc compounds such as zinc chloride, zinc octanoate, zinc 2-ethyl-1-hexanoate, zinc 2-ethylcaproate, zinc stearate, zinc naphthenate, and zinc acetylacetonate.
(c) Organotitanium compounds.
(d) Organozirconium compounds.
(e) Tertiary amines such as triethylamine, tributylamine, N,N-diisopropylethylamine, and N,N-dimethylethanolamine.
(f) Diamines such as triethylenediamine, tetramethylethylenediamine, and 1,4-diazabicyclo[2.2.2]octane.

In the method for producing the polyisocyanate composition of the present embodiment, a solvent may or may not be used. Solvents that may be used in the method for producing the polyisocyanate composition of the present embodiment may be either hydrophilic solvents or hydrophobic solvents. Examples of these hydrophilic solvents and hydrophobic solvents include the same solvents as those listed above in relation to the aforementioned other constituent components.

Further, in the method for producing the polyisocyanate composition of the present embodiment, at least one selected from the group consisting of antioxidants, photostabilizers, polymerization inhibitors and surfactants may also be added in addition to the hydrophilic polyisocyanate compound. Examples of the antioxidants, photostabilizers, polymerization inhibitors and surfactants include the same substances as those listed above in relation to the aforementioned other constituent components.

<Characteristics of the Polyisocyanate Composition>

From the viewpoint of ease of blending of the coating material, the viscosity of the polyisocyanate composition at 25°C is preferably 100 mPa·s to 10,000 mPa·s, more preferably 500 mPa·s to 7,000 mPa·s, and even more preferably 1,000 mPa·s to 5,000 mPa·s.

From the viewpoint of the solvent resistance of the coating film, the isocyanate group content of the polyisocyanate composition of the present embodiment, relative to the non-volatile fraction content deemed to be 100% by mass, is preferably 10.0% by mass to 25.0% by mass, and more preferably 15.0% by mass to 21.0% by mass. There are no particular limitations on the method for controlling the isocyanate group content to a value within the aforementioned range, and for example, a method in which the blend ratio between the hydrophilic compound and the polyisocyanate compound is adjusted may be used.

In the present embodiment, the viscosity and the isocyanate group content can be measured using the methods described below in the examples.

<Blocking>

The polyisocyanate composition of the present embodiment may contain a blocked polyisocyanate obtained by reacting and blocking an isocyanate group in the polyisocyanate with a thermally dissociable blocking agent. In other words, in such a case, the polyisocyanate composition of the present embodiment may be referred to as a blocked polyisocyanate composition.

The blocking process may be performed on both the ionic polyisocyanate compound (A) and the nonionic polyisocyanate compound (B), or may be performed on only one of the ionic polyisocyanate compound (A) and the nonionic polyisocyanate compound (B). Among them, it is preferable that both the ionic polyisocyanate compound (A) and the nonionic polyisocyanate compound (B) are blocked.

The blocking of the ionic polyisocyanate compound (A) and/or the nonionic polyisocyanate compound (B) may be either complete blocking or partial blocking. In the case of partial blocking, the blocking rate relative to the total molar amount of isocyanate groups, is preferably 10 mol% to less than 100 mol%.

[Thermally Dissociable Blocking Agent]

A blocked polyisocyanate is a polyisocyanate in which at least a portion of the isocyanate groups have been blocked with a thermally dissociable blocking agent.

The thermally dissociable blocking agent is a compound containing one active hydrogen within a molecule thereof, and has a property of dissociating from the isocyanate group upon heating. Specific examples of the thermally dissociable blocking agent include alcohol-based compounds, alkylphenol-based compounds, phenol-based compounds, active methylene-based compounds, mercaptan-based compounds, acid amide-based compounds, acid imide-based compounds, imidazole-based compounds, urea-based compounds, oxime-based compounds, amine-based compounds, imine-based compounds, and pyrazole-based compounds.

More specific examples of the thermally dissociable blocking agent include compounds listed in (1) to (13) below. One of these blocking agents may be used alone, or a combination of at least two thereof may be used.

(1) Alcohol-based compounds: methanol, ethanol, 2-propanol, n-butanol, sec-butanol, 2-ethyl-1-hexanol, 2-methoxyethanol, 2-ethoxyethanol and 2-butoxyethanol.

(2) Alkylphenol-based compounds: monoalkyl or dialkyl phenols having an alkyl group having 4 or more carbon atoms as a substituent, such as monoalkyl phenols such as n-propylphenol, i-propylphenol, n-butylphenol, sec-butylphenol, tert-butylphenol, n-hexylphenol, 2-ethylhexylphenol, n-octylphenol, and n-nonylphenol; and dialkylphenols such as di-n-propylphenol, diisopropylphenol, isopropylcresol, di-n-butylphenol, di-tert-butylphenol, di-sec-butylphenol, di-n-octylphenol, di-2-ethylhexylphenol, and di-n-nonylphenol.

(3) Phenol-based compounds: phenol, cresol, ethylphenol, styrenated phenol, and hydroxybenzoate esters.

(4) Active methylene-based compounds: dimethyl malonate, diethyl malonate, methyl acetoacetate, ethyl acetoacetate, and acetylacetone.

(5) Mercaptan-based compounds: butylmercaptan, and dodecylmercaptan.

(6) Acid amide-based compounds: acetanilide, acetamide, ε-caprolactam, δ-valerolactam, and γ-butyrolactam.

(7) Acid imide-based compounds: succinimide, and maleimide.

(8) Imidazole-based compounds: imidazole, and 2-methylimidazole.

(9) Urea-based compounds: urea, thiourea, and ethylene urea.

(10) Oxime-based compounds: formaldoxime, acetaldoxime, acetoxime, methyl ethyl ketoxime, and cyclohexanone oxime.

(11) Amine-based compounds: diphenylamine, aniline, carbazole, di-n-propylamine, diisopropylamine, and isopropylethylamine.

(12) Imine-based compounds: ethyleneimine, and polyethyleneimine.

(13) Pyrazole-based compounds: pyrazole, 3-methylpyrazole, and 3,5-dimethylpyrazole.

Among them, the thermally dissociable blocking agent preferably includes at least one compound selected from the group consisting of oxime-based compounds, pyrazole-based compounds, active methylene-based compounds, amine-based compounds and acid amide-based compounds, and from the viewpoint of the storage stability when a coating liquid containing an amphiphilic solvent is formed, a pyrazole-based compound or an oxime-based compound is more preferable.

<Method for Producing Blocked Polyisocyanate>

Although there are no particular limitations, the blocked polyisocyanate can be obtained, for example, by reacting the aforementioned polyisocyanate, the aforementioned hydrophilic compound, and the aforementioned thermally dissociable blocking agent.

The reaction between isocyanate groups of the polyisocyanate and the active hydrogen group of the hydrophilic compound, and the reaction between isocyanate groups of the polyisocyanate and the thermally dissociable blocking agent may be conducted simultaneously, or one of the reactions may be conducted first, and the second reaction then conducted thereafter. Among them, it is preferable that the reaction between the isocyanate group and the active hydrogen group of the hydrophilic compound be conducted first to obtain the polyisocyanate having a structural unit derived from the hydrophilic compound, followed by conducting the reaction with the thermally dissociable blocking agent.

In the reaction process, an organometallic salt of tin, zinc or lead or the like, a tertiary amine-based compound, or an alkali metal alcoholate such as sodium alcoholate may be used as a catalyst.

The reaction temperature of the reaction process is preferably -20°C to 150°C, and more preferably 30°C to 100°C. By ensuring that the reaction temperature is the aforementioned lower limit or more, the reactivity tends to be improved. Further, by ensuring that the reaction temperature is the aforementioned upper limit or less, side reactions tend to be able to be more effectively suppressed.

The hydrophilic compound is preferably reacted completely with the polyisocyanate so that no hydrophilic compound remains in an unreacted state. By ensuring that no hydrophilic compound remains in an unreacted state, the deterioration in the dispersion stability in water of the blocked polyisocyanate can be suppressed, and the deterioration in the curability upon formation of a coating composition tends to be better suppressed.

<<Coating Composition>>

The coating composition of the present embodiment contains the polyisocyanate composition described above and a resin.

By including the polyisocyanate composition described above, the coating composition of the present embodiment exhibits superior external appearance, water resistance and hardness upon formation of a coating film.

The coating composition of the present embodiment can be used as an organic solvent-based coating composition, but is preferably used in the form of a water-based coating composition in which the polyisocyanate composition described above and a resin that functions as a coating film-forming component are dissolved or dispersed in a solvent containing mainly water. The coating composition can be used, in particular, in building coating materials, automobile coating materials, automotive repair coating materials, coating materials for plastics, pressure-sensitive adhesives, adhesives, building materials, household water-based coating materials, other coating materials, sealants, inks, cast molding materials, elastomers, foams, raw materials of plastics, and fiber treatment agents.

<Resins>

There are no particular limitations on the resins used as the main agent, and examples thereof include acrylic resins, polyester resins, polyether resins, epoxy resins, fluororesins, polyurethane resins, polyvinylidene chloride copolymers, polyvinyl chloride copolymers, vinyl acetate copolymers, acrylonitrile-butadiene copolymers, polybutadiene copolymers, and styrene-butadiene copolymers.

Among these, an acrylic resin, polyester resin or polyether resin is preferable as the resin.

[Acrylic Resins]

There are no particular limitations on the acrylic resins, and examples thereof include acrylic resins obtained by polymerizing one monomer, or a mixture of monomers, selected from polymerizable monomers listed in (a) to (e) below. One of these acrylic resins may be used alone, or a mixture thereof may be used.

(a) (Meth)acrylate esters such as methyl (meth)acrylate, ethyl (meth)acrylate, isopropyl (meth)acrylate, n-butyl (meth)acrylate, 2-ethylhexyl (meth)acrylate, and lauryl (meth)acrylate.

(b) (Meth)acrylate esters having an active hydrogen such as 2-hydroxyethyl (meth)acrylate, 2-hydroxypropyl (meth) acrylate, 2-hydroxybutyl (meth)acrylate, 3-hydroxypropyl (meth)acrylate, and 4-hydroxybutyl (meth)acrylate.
(c) Unsaturated carboxylic acids such as acrylic acid, methacrylic acid, maleic acid, and itaconic acid.
(d) Unsaturated amides such as acrylamide, N-methylolacrylamide, and diacetoneacrylamide.
(e) Other polymerizable monomers such as glycidyl methacrylate, styrene, vinyltoluene, vinyl acetate, acrylonitrile, dibutyl fumarate, p-styrenesulfonic acid, and allylsulfosuccinic acid.

Although the polymerization method of these monomers is generally emulsion polymerization, suspension polymerization, dispersion polymerization or solution polymerization may also be adopted. In the case of emulsion polymerization, a stepwise polymerization may also be conducted.

[Polyester Resins]

There are no particular limitations on the polyester resins, and examples thereof include polyester resins obtained by subjecting either one carboxylic acid or a mixture of carboxylic acids and either one polyhydric alcohol or a mixture of polyhydric alcohols to a condensation reaction.
Examples of the carboxylic acid include succinic acid, adipic acid, sebacic acid, dimer acid, maleic anhydride, phthalic anhydride, isophthalic acid, terephthalic acid, trimellitic acid, and pyromellitic acid.
Examples of the polyhydric alcohols include diols, triols, and tetraols.
Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethylhexanediol, 1,2-octanediol, 1,2-decanediol, 2,2,4-trimethylpentanediol, 2-butyl-2-ethyl-1,3-propanediol, and 2,2-diethyl-1,3-propanediol.
Examples of the triols include glycerol and trimethylolpropane.
Examples of the tetraols include diglycerol, dimethylolpropane, and pentaerythritol.
Further, for example, polycaprolactones obtained by conducting a ring-opening polymerization of ε-caprolactone at the hydroxyl group of a low-molecular weight polyol may also be used as polyester resins.

[Polyether Resins]

Examples of the polyether resins include resins described in (a) to (d) below.

(a) Polyether polyols obtained by using a strongly basic catalyst to add either one alkylene oxide or a mixture of alkylene oxides to either one polyhydric hydroxy compound or a mixture of polyhydric hydroxy compounds.
(b) Polyether polyols obtained by reacting an alkylene oxide with a polyamine compound.
(c) Polyether polyols obtained by ring-opening polymerization of a cyclic ether.
(d) So-called polymer polyols obtained by polymerizing acrylamide or the like using a polyether polyol obtained in (a) to (c) as the reaction medium.

Examples of the polyhydric hydroxy compound in (a) include compounds (i) to (vi) listed below.

(i) Diglycerol, ditrimethylolpropane, pentaerythritol, and dipentaerythritol.
(ii) Sugar alcohol-based compounds such as erythritol, D-threitol, L-arabinitol, ribitol, xylitol, sorbitol, mannitol, galactitol, and rhamnitol.
(iii) Monosaccharides such as arabinose, ribose, xylose, glucose, mannose, galactose, fructose, sorbose, rhamnose, fucose, and ribodesose.
(iv) Disaccharides such as trehalose, sucrose, maltose, cellobiose, gentiobiose, lactose, and melibiose.
(v) Trisaccharides such as raffinose, gentianose, and melezitose.
(vi) Tetrasaccharides such as stachyose.

Examples of the strongly basic catalyst in (a) mentioned above include hydroxides, alcoholates and alkylamines of alkali metals. Examples of the alkali metals include lithium, sodium, and potassium.
Examples of the alkylene oxide in (a) include ethylene oxide, propylene oxide, butylene oxide, cyclohexene oxide, and styrene oxide.
Examples of the polyamine compound in (b) include ethylenediamines.
Examples of the cyclic ether in (c) include tetrahydrofuran.
Furthermore, in the coating composition of the present embodiment, these resins may be used in combination

with other resins such as melamine-based curing agents, urethane dispersions or urethane acrylic emulsions, as needed.

Further, these resins are preferably emulsified, dispersed or dissolved in water. For this reason, the carboxyl groups or sulfonic acid groups contained in the resins may be neutralized.

There are no particular limitations on the neutralizing agent used to neutralize the carboxyl groups or sulfonic acid groups, and examples thereof include ammonia and water-soluble amine compounds.

Examples of the water-soluble amine compounds include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine. One of these compounds may be used alone, or a combination of at least two thereof may be used.

Among them, the neutralizing agent is preferably a tertiary amine as, and more preferably triethylamine or dimethylethanolamine.

<Other Components>

In addition to the polyisocyanate composition and the resin described above, the coating composition of the present embodiment may also include additives generally added to coating materials. Examples of the additives include inorganic pigments, organic pigments, extender pigments, silane coupling agents, titanium coupling agents, organic phosphates, organic phosphites, thickeners, leveling agents, thixotropic agents, antifoaming agents, freeze stabilizers, matting agents, crosslinking reaction catalysts (curing acceleration catalysts), antiskinning agents, dispersants, humectants, fillers, plasticizers, lubricants, reduction agents, preservatives, antifungal agents, deodorants, yellowing inhibitors, ultraviolet absorbers, antistatic agents or static moderators, and antisettling agents. One of these additives may be included alone, or a combination of at least two thereof may be included.

There are no particular limitations on the crosslinking reaction catalysts (curing acceleration catalysts), and examples thereof include substances listed in (a) and (b) below.

(a) Metal salts such as dibutyltin dilaurate, tin 2-ethylhexanoate, zinc 2-ethylhexanoate, and cobalt salts.

(b) Tertiary amines such as triethylamine, pyridine, methylpyridine, benzyldimethylamine, N,N-dimethylcyclohexylamine, N-methylpiperidine, pentamethyldiethylenetriamine, N,N'-endo-ethylenepiperazine and N,N'-dimethylpiperazine.

In order to improve the dispersibility in coating materials, the coating composition of the present embodiment may also contain a surfactant in addition to the polyisocyanate composition and resins described above.

In order to improve the storage stability of the coating material, the coating composition of the present embodiment may also contain an antioxidant, photostabilizer and/or polymerization inhibitor in addition to the polyisocyanate composition and resins described above.

<Method for Producing Coating Composition>

The coating composition of the present embodiment may be obtained by using conventional methods to mix the polyisocyanate composition and resins described above, and, as needed, other components.

For example, in the case of a water-based coating composition, the additives described above in the section relating to other components may be added, as necessary, to the resin or a water dispersion or aqueous solution thereof. Subsequently, the polyisocyanate composition described above or a water dispersion thereof is added as a curing agent, and water or a solvent is further added, as required, to adjust the viscosity. The water-based coating composition can then be obtained by forcibly stirring the mixture using a stirring device.

In the case of the production of a solvent-based coating composition, first, the additives described above in the section relating to other components may be added, as necessary, to the resin or a solvent dilution thereof. Subsequently, the polyisocyanate composition described above is added as a curing agent, and a solvent is further added, as required, to adjust the viscosity. The solvent-based coating composition can then be obtained by stirring the mixture by hand or using a stirrer such as a Mazelar mixer.

<<Coated Substrate>>

A coated substrate of the present embodiment is a substrate that has been coated with the coating composition described above. The coated substrate of the present embodiment preferably has a coating layer containing the coating composition described above.

Since the coated substrate of the present embodiment has a coating film formed by curing the coating

composition described above, the coated substrate exhibits excellent external appearance, water resistance, and hardness.

The coated substrate of the present embodiment can be obtained by coating the coating composition described above onto a substrate using a conventional method such as roll coating, curtain flow coating, spray coating, bell coating or electrostatic coating, and then conducting normal temperature drying or a baking step to cure the composition.

The coated substrate of the present embodiment includes the desired substrate, and in some cases, may also include a typical primer that is applied prior to coating.

Examples of the substrate include metals, wood, glass, stone, ceramic materials, concrete, hard and flexible plastics, textile products, leather products, and paper.

EXAMPLES

The present invention is described below in further detail with reference to examples and comparative examples, but the present invention is not limited to the following examples.

In the examples and comparative examples, the physical properties and evaluations of the polyisocyanate compositions were measured and evaluated using the methods described below. Unless specifically stated otherwise, "parts" and "%" mean "parts by mass" and "% by mass" respectively.

<Measurement Methods>

[Physical Property 1]

(Viscosity)

The viscosity was measured at 25°C using an E-type viscometer (manufactured by Tokimec Inc.). A standard rotor (1°34' × R24) was used. The rotational rate was set as follows.

(Rotational rate)

100 rpm (in the case of viscosity less than 128 mPa·s)
50 rpm (in the case of viscosity of 128 mPa·s to less than 256 mPa·s)
20 rpm (in the case of viscosity of 256 mPa·s to less than 640 mPa·s)
10 rpm (in the case of viscosity of 640 mPa·s to less than 1,280 mPa·s)
5 rpm (in the case of viscosity of 1,280 mPa·s to less than 2,560 mPa·s)
2.5 rpm (in the case of viscosity of 2,560 mPa·s to less than 5,120 mPa·s)

[Physical Property 2]

(Isocyanate group Content (NCO%))

Using the polyisocyanate compounds obtained in the synthesis examples and the polyisocyanate compositions obtained in the examples and comparative examples as samples, measurement of the isocyanate group content was conducted in accordance with the method described in JIS K7301-1995 (Testing methods for tolylene diisocyanate type prepolymers for thermosetting urethane elastomers). A more detailed description of the method for measuring the isocyanate group content (NCO%) is described below.

(1) One gram (Wg) of the sample was placed in a 200 mL conical flask, and 20 mL of toluene was added to the flask to dissolve the sample.
(2) Subsequently, 20 mL of a 2.0 N di-n-butylamine toluene solution was added to the flask, and the flask was left to stand for 15 minutes.
(3) Next, 70 mL of 2-propanol was added to the flask to dissolve the contents and obtain a solution.
(4) The solution obtained in (3) was titrated using a 1 mol/L hydrochloric acid, and the sample titer ($V_1$ mL) was determined.
(5) Using the same method as (1) to (3), measurement was conducted without adding the sample, and a blank titer ($V_0$ mL) was determined.

Based on the sample titter and the blank titer determined above, the isocyanate group content (NCO%) was calculated using the following formula.

$$\text{Isocyanate group content (\% by mass)} = (V_0\text{-}V_1)\times 42/[W(1\ g)\times 1000]\times 100$$

[Physical Property 3]

(Mass Ratio (A)/(B) and Mass Ratio (a2)/(b2))

The mass ratio (A)/(B) of the ionic polyisocyanate compound (A) relative to the nonionic polyisocyanate compound (B), and the mass ratio (a2)/(b2) of the structural unit (a2) derived from the ionic compound contained in the ionic polyisocyanate compound (A) relative to the structural unit (b2) derived from the nonionic compound contained in the nonionic polyisocyanate compound (B) were measured by liquid chromatography - mass spectrometry (LC-MS).

Specifically, using the polyisocyanate composition as a sample, the modification rate by the ionic compound in the ionic polyisocyanate (A) and the modification rate by the nonionic compound in the nonionic polyisocyanate (B) were calculated from the ratios between the peak surface areas of the ionic polyisocyanate (A), the nonionic polyisocyanate (B) and the unmodified polyisocyanate compound in a liquid chromatography (LC) trace at 220 nm. Subsequently, the amounts of the ionic polyisocyanate (A) and the nonionic polyisocyanate (B) were calculated using the calculated rates of modification to determine the mass ratio (A)/(B). Further, the ratio of the modification rate by the ionic compound in the ionic polyisocyanate (A) relative to the modification rate by the nonionic compound in the nonionic polyisocyanate (B) was used as the mass ratio (a2)/(b2). Furthermore, the modification rate by the ionic compound in the ionic polyisocyanate (A) and the modification rate by the nonionic compound in the nonionic polyisocyanate (B) were recorded in the tables below as the amount of the structural unit derived from the ionic compound and the amount of the structural unit derived from the nonionic compound respectively.

The LC measurement conditions for the nonionic polyisocyanate (B) and the unmodified polyisocyanate compound were as follows.

(Measurement Conditions)

LC apparatus: UPLC (trade name) manufactured by Waters Corporation
Column: ACQUITY UPLC HSS T3 1.8 μm C18, internal diameter 2.1 mm × length 50 mm, manufactured by Waters Corporation
Flow rate: 0.3 mL/min
Mobile phases: A = 10 mM aqueous solution of ammonium acetate, B = acetonitrile
Gradient conditions: A/B in the initial mobile phase composition was 98/2 (volume ratio). After the sample was injected, the proportion of B was increased linearly such that after 10 minutes, A/B became 0/100 (volume ratio).
Detection method: Photodiode array detector. Measurement wavelength was 220 nm.

The ionic polyisocyanate (A) was measured with the following additional conditions applied as well as the measurement conditions mentioned above.

(Additional Measurement Conditions)

Ionization mode: Electrospray ionization, and positive and negative ion detection.
Scan range: m/z 100 to 2,000

[Physical Property 5]

(Amount of each of the aforementioned Structures derived from Isocyanate Groups in the Polyisocyanate Composition)

Each of the obtained polyisocyanate compositions was subjected to a $^{13}$C-NMR measurement using a Biospin Avance 600 (trade name) manufactured by Bruker Corporation. Specific measurement conditions were as follows.

(Measurement conditions)

$^{13}$C-NMR apparatus: AVANCE 600 (manufactured by Bruker Corporation)

CryoProbe (manufactured by Bruker Corporation)
CryoProbe (registered trademark)
CPDUL
600S3-C/H-D-05Z

Resonance frequency: 150 MHz
Concentration: 60 wt/vol%
Shift reference: $CDCl_3$ (77 ppm)
Number of integrations: 10,000
Pulse program: zgpg 30 (proton perfect decoupling method, waiting time: 2 sec)

The signal integral values described below were divided by the number of measured carbons to determine each of the mole fractions relative to the total molar amount (100 mol%) of isocyanurate groups, iminooxadiazinedione groups, allophanate groups and uretdione groups. Using the thus obtained mole fractions, the total amount of uretdione groups and allophanate groups, relative to the total molar amount of isocyanurate groups, iminooxadiazinedione groups, uretdione groups and allophanate groups, and the mole ratio of uretdione groups relative to allophanate groups (the mole ratio of uretdione groups / allophanate groups) were calculated.

Isocyanurate groups: (integral value near 148.6 ppm) ÷ 3
Iminooxadiazinedione groups: (integral value near 135.5 ppm) ÷ 1
Allophanate groups: (integral value near 154 ppm) ÷ 1
Uretdione groups: (integral value near 157 ppm) ÷ 2

<Evaluation Methods>

[Evaluation 1]

(Dispersibility in Water of Polyisocyanate Composition)

Using each of the polyisocyanate compositions obtained in examples and comparative examples as samples, the dispersibility in water was evaluated using the method described below.

(1) The mass of a 100 mL flask and a piece of Yoshino paper was measured (WO g).
(2) The polyisocyanate composition was added to the 100 mL flask such that the solid content became 16 g (W2 g), and 24 g of deionized water was then added.
(3) The solution inside the 100 mL flask was stirred using a propeller blade at 200 rpm for 3 minutes, and then filtered using the Yoshino paper weighed above in (1).
(4) The filtration residue remaining on the Yoshino paper and the residue retained in the 100 mL flask were combined and heated in a dryer at 105°C for one hour, and the mass (g) thereof was determined (W1 g).
(5) The proportion of the polyisocyanate composition dispersed in water was determined using the equation below. In the equation, Y is the non-volatile content (% by mass).

$$[\text{Proportion dispersed in water (\% by mass)}]$$

$$= \{1 - (\text{W2 (g)} - \text{W0 (g)}) / (\text{W2 (16 g)} \times \text{Y})\} \times 100$$

(6) Subsequently, the dispersibility in water was evaluated in accordance with the following evaluation criteria.

(Evaluation Criteria)

◦: 90% by mass or more
Δ: 80% by mass to less than 90% by mass
×: less than 80% by mass

[Production of Coating Compositions]

First, 40 g of an acrylic polyol water dispersion (manufactured by Covestro AG under the trade name of "Bayhydrol A2470", hydroxyl value per resin: 128.7 mgKOH/g,) was weighed into a flask. Next, each (blocked) polyisocyanate composition was added thereto such that each mole ratio (NCO/OH) of isocyanate groups in each polyisocyanate composition obtained in Examples 1 to 19 and Comparative Examples 1 to 5 or a blocked polyisocyanate composition obtained in Examples 20 or 21 relative to hydroxyl groups in an acrylic polyol water dispersion became 1.5. Deionized water was then added to adjust the solid content in the coating composition to 42% by mass, and the resulting mixture was stirred at 600 rpm for 10 minutes using a propeller blade to obtain each coating composition. The resultant coating compositions were evaluated as described below.

[Evaluation 2]

(Pot Life)

The change in concentration of isocyanate groups in the coating composition was calculated from the intensity ratio of the isocyanate absorption peak (near a wave number of 2,271 $cm^{-1}$) relative to the isocyanurate absorption peak (near a wave number of 1,686 $cm^{-1}$) in an infrared absorption spectrum (detector: TGS, number of integrations: 16, resolution: 4 $cm^{-1}$) measured using an FT/IR[4] 200 type A apparatus (trade name) manufactured by Jasco Corporation. The time immediately following production of the coating composition was deemed 0 hours, the value of isocyanate absorption peak intensity / isocyanurate absorption peak intensity at that time was deemed X0, the value of the peak intensity ratio after n hours was determined as Xn, and the "isocyanate group retention ratio" was calculated as Xn/X0. The time over which an isocyanate group retention ratio of at least 80% could be maintained was measured, and the pot life was then evaluated in accordance with the following evaluation criteria.

(Evaluation Criteria)

◦: 4 hours or more
Δ: 2 hours to less than 4 hours
×: less than 2 hours

[Evaluation 3]

(External Appearance of Coating Film)

A coating film with a thickness of 40 μm was formed on a white board using each coating composition. Subsequently, the coating film was dried in an atmosphere at 23°C and 50% humidity. Following drying overnight, the 60° gloss value of the obtained coating film was measured under the conditions prescribed in JIS Z8741 using a gloss meter (digital angle-variable glossmeter UDV-6P (trade name) manufactured by Suga Test Instruments Co., Ltd.). The external appearance was then evaluated in accordance with the following evaluation criteria.

(Evaluation Criteria)

◦: The 60° gloss value was 92% or higher.
Δ: The 60° gloss value was 85% to less than 92%.
×: The 60° gloss value was less than 85%.

[Evaluation 4]

(Water Resistance 1 of Coating Film)

Each coating composition was applied to a glass plate with an applicator to form a film having a thickness of 40 μm. The resultant was then dried in an atmosphere at 23°C and 50% humidity for 7 days to form a coating film. Subsequently, a silicon O-ring with a diameter of 20 mm was placed on the obtained coating film, and 0.5 g of water was then injected inside the O-ring. The water was left to stand at 23°C for 24 hours, and following removal of the remaining water from the surface, the appearance of the coating film was observed. The water resistance of the coating film was evaluated in accordance with the following evaluation criteria. However, coating films having an external appearance evaluated as × in the aforementioned "Evaluation 3" were unable to be evaluated visually, and therefore were evaluated as measurement impossible. In the following evaluation criteria, the term "blister" means a bubble or swelling in the surface of the coating film.

(Evaluation Criteria)

◦: No change was confirmed.
Δ: Loss of gloss was confirmed.
×: Blister formation, or cloudiness or dissolution of the coating film was confirmed.

[Evaluation 5]

(Water Resistance 2 of Coating Film)

Each coating composition was applied on a polypropylene (PP) plate with an applicator to form a film with a thickness of 40 μm. The resultant was then dried in an atmosphere at 23°C and 50% humidity for 7 days to form a coating film. Subsequently, a cutter was used to cut off about 0.2 g of the coating film, and this piece of the coating film was placed in distilled water at 40°C. After standing for 24 hours, the coating film was removed from the distilled water at 40°C, any residual water was removed from the surface, and then the appearance of the coating film was observed. The water resistance of the coating film was evaluated in accordance with the following evaluation criteria. However, coating films having an external appearance evaluated as × in the aforementioned "Evaluation 3" were unable to be evaluated visually, and therefore evaluated as measurement impossible.

(Evaluation Criteria)

◦: No change was confirmed.
Δ: A small amount of bubbling was confirmed.
×: A large amount of bubbling, or dissolution of the coating film was confirmed.

[Evaluation 6]

(Hardness of Coating Film)

Each coating composition was applied on a glass plate to form a film with a thickness of 40 μm. The resultant was then dried in an atmosphere at 23°C and 50% humidity, and after 7 days, the hardness of the resulting coating film was measured using a Koenig hardness tester (manufactured by BYK-Gardner under the trade name of "Pendulum hardness tester"). The hardness of the coating film was evaluated in accordance with the following evaluation criteria.

(Evaluation Criteria)

◦: At least 130 oscillations
Δ: 110 oscillations to less than 130 oscillations

×: Less than 110 oscillations

<Synthesis of Sulfonic Acid Amine Salts>

[Synthesis Example 1-1]

(Synthesis of HES/TBA)

10 parts by mass of 1-propanol was added to 20 parts by mass of an aqueous solution containing 70% by mass of 2-hydroxyethanesulfonic acid (hereinafter, may be abbreviated as "HES") at room temperature (about 23°C), and the mixture was stirred to obtain a solution. Subsequently, tributylamine (hereinafter, may be abbreviated as "TBA") was weighed out such that the molar equivalence ratio relative to the HES became 1, followed by diluting it with the same parts by mass of 1-propanol, and then the resultant was added dropwise to the solution under stirring. One hour after starting the dropwise addition, the stirring was terminated, and water and the solvent were removed with an evaporator to obtain a 2-hydroxyethanesulfonic acid tributylamine salt (hereinafter, may be abbreviated as "HES/TBA") with a solid content of 99.8% by mass.

[Synthesis Example 1-2]

(Synthesis of HPS/TBA)

With the exception of replacing HES with 2-hydroxypropanesulfonic acid (HPS), the same method as Synthesis Example 1-1 was used to obtain a 2-hydroxypropanesulfonic acid tributylamine salt (hereinafter, may be abbreviated as "HPS/TBA").

[Synthesis Example 1-3]

(Synthesis of HES/DMCHA)

With the exception of using dimethylcyclohexylamine (hereinafter, may be abbreviated as "DMCHA") instead of the TBA, the same method as Synthesis Example 1-1 was used to obtain a 2-hydroxyethanesulfonic acid dimethylcyclohexylamine salt (hereinafter, may be abbreviated as "HES/DMCHA") with a solid content of 99.8% by mass.

[Synthesis Example 1-4]

(Synthesis of Mixture of HES/TBA and HES/DMCHA)

10 parts by mass of 1-propanol was added to 20 parts by mass of an aqueous solution containing 70% by mass of 2-hydroxyethanesulfonic acid (hereinafter, may be abbreviated as "HES") at room temperature (about 23°C), and the mixture was stirred to obtain a solution. Subsequently, tributylamine (hereinafter, may be abbreviated as "TBA") was weighed out such that the molar equivalence ratio relative to the HES became 0.5, and dimethylcyclohexylamine (hereinafter, may be abbreviated as "DMCHA") was weighed out such that the molar equivalence ratio relative to the HES became 0.5, followed by diluting them with 15 parts by mass of 1-propanol. The diluted solution of TBA and DMCHA was then added dropwise to the HES solution under stirring. One hour after starting the dropwise addition, the stirring was terminated, and water in the solvent and 1-propanol were removed with an evaporator to obtain a mixture of HES/TBA and HES/DMCHA with a solid content of 99.8% by mass.

<Synthesis of Polyisocyanates>

[Synthesis Example 2-1]

(Synthesis of Polyisocyanate P-1)

The inside of a four-neck flask fitted with a stirrer, a thermometer, a reflux condenser, a nitrogen blowing tube and a dropping funnel was flushed with nitrogen and then charged with 1,000 g of HDI and 4.0 g of isobutanol, and the temperature inside the reaction flask was held at 70°C under constant stirring. Tetramethylammonium caprate was then added to the flask, and when the yield reached 40% by mass, phosphoric acid was added to terminate the reaction. Subsequently, the reaction liquid was filtered, and the unreacted HDI was removed using a thin film evaporator to obtain a

polyisocyanate P-1. The viscosity of the obtained polyisocyanate P-1 at 25°C was 2,700 mPa·s, and the isocyanate group content was 21.7% by mass.

[Synthesis Example 2-2]

(Synthesis of Polyisocyanate P-2)

The inside of a four-neck flask fitted with a stirrer, a thermometer, a reflux condenser, a nitrogen blowing tube and a dropping funnel was flushed with nitrogen and then charged with 1,000 g of HDI and 4.0 g of isobutanol, and the temperature inside the reaction flask was held at 70°C under constant stirring. Tetramethylammonium caprate was then added to the flask, and when the yield reached 16% by mass, phosphoric acid was added to terminate the reaction. Subsequently, the temperature was raised to 160°C and held at that temperature for one hour. The reaction liquid was filtered, and then the unreacted HDI was removed using a thin film evaporator to obtain a polyisocyanate P-2. The viscosity of the obtained polyisocyanate P-2 at 25°C was 500 mPa·s, and the isocyanate group content was 23.3% by mass.

[Synthesis Example 2-3]

(Synthesis of Polyisocyanate P-3)

The inside of a four-neck flask fitted with a stirrer, a thermometer, a reflux condenser, a nitrogen blowing tube and a dropping funnel was flushed with nitrogen and then charged with 6,000 parts by mass of HDI, and the temperature inside the reaction flask was held at 60°C under constant stirring for two hours. Subsequently, 80 parts by mass of tri-n-butylphosphine (under the trade name of Cytop) was added as an isocyanuration and uretdionization catalyst to allow both an isocyanuration reaction and uretdionization reaction to proceed. When the conversion rate reached 40% by mass, 140 parts by mass of methyl p-toluenesulfonate was added to terminate the reaction. Following cooling and filtering of the reaction liquid, the unreacted HDI was removed using a thin film evaporator to obtain a polyisocyanate P-3. The thus obtained polyisocyanate P-3 had a viscosity at 25°C of 320 mPa·s, and an isocyanate group content of 22.0% by mass.

[Synthesis Example 2-4]

(Synthesis of Polyisocyanate P-4)

The inside of a four-neck flask fitted with a stirrer, a thermometer, a reflux condenser, a nitrogen blowing tube and a dropping funnel was flushed with nitrogen and then charged with 561.9 g of HDI and 38.1 g of isobutanol, and a urethanation reaction was conducted at 90°C for 60 minutes under constant stirring. Subsequently, the temperature was raised to 120°C, and 0.28 g of a mineral spirit solution of zirconyl 2-ethylhexanoate with a solid content of 20% was then added as an allophanation catalyst. Following further stirring for 60 minutes, 0.097 g of an aqueous solution of phosphoric acid with a solid content of 85% was added to terminate the reaction. The reaction liquid was filtered, and the unreacted HDI was then removed using a thin film evaporator to obtain a polyisocyanate P-4. The thus obtained polyisocyanate P-4 was a light-yellow transparent liquid, the yield was 203 g, the viscosity at 25°C was 130 mPa·s, and the isocyanate group content was 18.8% by mass. Measurement by $^{1}$H-NMR revealed that the mole ratio of isocyanurate groups / allophanate groups was 3/97.

<Production of Polyisocyanate Compositions>

[Example 1]

(Production of Polyisocyanate Composition PA-a1)

1. Preparation of Ionic Polyisocyanate Compound

5.9 parts by mass of the HES/TBA obtained in Synthesis Example 1-1 was added to 92.1 parts by mass of the polyisocyanate P-1 obtained in Synthesis Example 2-1 (the molar equivalence ratio of isocyanate groups / hydroxyl groups was 25), and the reaction was allowed to proceed by stirring the mixture under a stream of nitrogen and under reflux conditions at 120°C for 3 hours. Subsequently, the reflux condenser was removed, and the reaction was continued under stirring at 100°C for one hour to obtain an ionic polyisocyanate compound.

2. Preparation of Nonionic Polyisocyanate Compound

0.1 parts by mass of a polyethylene glycol monomethyl ether with an average number of ethylene oxide repeating units of 9.4 (manufactured by Nippon Nyukazai Co., Ltd., under the trade name of "MPG-130") was added to 1.9 parts by mass of the polyisocyanate P-2 obtained in Synthesis Example 2-2 (the molar equivalence ratio of isocyanate groups / hydroxyl groups was 41), and the reaction was allowed to proceed by stirring the mixture under a stream of nitrogen at 90°C for 6 hours. After completion of the reaction, a nonionic polyisocyanate compound was obtained.

3. Production of Polyisocyanate Composition PA-a1

The total amount of the ionic polyisocyanate compound obtained above in [1.] and the total amount of the nonionic polyisocyanate compound obtained above in [2.] were stirred at 60°C for 2 hours under a nitrogen atmosphere until a uniform mixture was achieved, thereby obtaining a polyisocyanate composition PA-a1.

[Example 2]

(Production of Polyisocyanate Composition PA-a2)

With the exceptions of using 89.3 parts by mass of the polyisocyanate P-1 obtained in Synthesis Example 2-1, 5.7 parts by mass of the HES/TBA obtained in Synthesis Example 1-1 (the molar equivalence ratio of isocyanate groups / hydroxyl groups was 25), 4.7 parts by mass of the polyisocyanate P-2 obtained in Synthesis Example 2-2, and 0.3 parts by mass of MPG-130 (the molar equivalence ratio of isocyanate groups / hydroxyl groups was 37), the same method as Example 1 was used to produce a polyisocyanate composition PA-a2.

[Example 3]

(Production of Polyisocyanate Composition PA-a3)

With the exceptions of using 84.6 parts by mass of the polyisocyanate P-1 obtained in Synthesis Example 2-1, 5.4 parts by mass of the HES/TBA obtained in Synthesis Example 1-1 (the molar equivalence ratio of isocyanate groups / hydroxyl groups was 25), 9.4 parts by mass of the polyisocyanate P-2 obtained in Synthesis Example 2-2, and 0.6 parts by mass of MPG-130 (the molar equivalence ratio of isocyanate groups / hydroxyl groups was 37), the same method as Example 1 was used to produce a polyisocyanate composition PA-a3.

[Example 4]

(Production of Polyisocyanate Composition PA-a4)

With the exceptions of using 75.2 parts by mass of the polyisocyanate P-1 obtained in Synthesis Example 2-1, 4.8 parts by mass of the HES/TBA obtained in Synthesis Example 1-1 (the molar equivalence ratio of isocyanate groups / hydroxyl groups was 25), 18.8 parts by mass of the polyisocyanate P-2 obtained in Synthesis Example 2-2, and 1.1 parts by mass of MPG-130 (the molar equivalence ratio of isocyanate groups / hydroxyl groups was 41), the same method as Example 1 was used to produce a polyisocyanate composition PA-a4.

[Example 5]

(Production of Polyisocyanate Composition PA-a5)

With the exceptions of using 56.4 parts by mass of the polyisocyanate P-1 obtained in Synthesis Example 2-1, 3.6 parts by mass of the HES/TBA obtained in Synthesis Example 1-1 (the molar equivalence ratio of isocyanate groups / hydroxyl groups was 25), 37.7 parts by mass of the polyisocyanate P-2 obtained in Synthesis Example 2-2, and 2.3 parts by mass of MPG-130 (the molar equivalence ratio of isocyanate groups / hydroxyl groups was 39), the same method as Example 1 was used to produce a polyisocyanate composition PA-a5.

[Example 6]

(Production of Polyisocyanate Composition PA-a6)

With the exceptions of using 47.0 parts by mass of the polyisocyanate P-1 obtained in Synthesis Example 2-1, 3.0 parts by mass of the HES/TBA obtained in Synthesis Example 1-1 (the molar equivalence ratio of isocyanate groups / hydroxyl groups was 25), 47.2 parts by mass of the polyisocyanate P-2 obtained in Synthesis Example 2-2, and 2.8 parts by mass of MPG-130 (the molar equivalence ratio of isocyanate groups / hydroxyl groups was 40), the same method as Example 1 was used to produce a polyisocyanate composition PA-a6.

[Example 7]

(Production of Polyisocyanate Composition PA-a7)

With the exceptions of using 37.6 parts by mass of the polyisocyanate P-1 obtained in Synthesis Example 2-1, 2.4 parts by mass of the HES/TBA obtained in Synthesis Example 1-1 (the molar equivalence ratio of isocyanate groups / hydroxyl groups was 26), 56.6 parts by mass of the polyisocyanate P-2 obtained in Synthesis Example 2-2, and 3.4 parts by mass of MPG-130 (the molar equivalence ratio of isocyanate groups / hydroxyl groups was 40), the same method as Example 1 was used to produce a polyisocyanate composition PA-a7.

[Example 8]

(Production of Polyisocyanate Composition PA-a8)

With the exceptions of using 89.3 parts by mass of the polyisocyanate P-1 obtained in Synthesis Example 2-1, 5.7 parts by mass of the HES/TBA obtained in Synthesis Example 1-1 (the molar equivalence ratio of isocyanate groups / hydroxyl groups was 25), 4.5 parts by mass of the polyisocyanate P-2 obtained in Synthesis Example 2-2, and 0.5 parts by mass of MPG-130 (the molar equivalence ratio of isocyanate groups / hydroxyl groups was 21), the same method as Example 1 was used to produce a polyisocyanate composition PA-a8.

[Example 9]

(Production of Polyisocyanate Composition PA-a9)

With the exceptions of using 84.6 parts by mass of the polyisocyanate P-1 obtained in Synthesis Example 2-1, 5.4 parts by mass of the HES/TBA obtained in Synthesis Example 1-1 (the molar equivalence ratio of isocyanate groups / hydroxyl groups was 25), 9.4 parts by mass of the polyisocyanate P-2 obtained in Synthesis Example 2-2, and 0.6 parts by mass of a polyethylene glycol monomethyl ether with an average number of ethylene oxide repeating units of 15.0 (manufactured by Nippon Nyukazai Co., Ltd., under the trade name of "MPG-081") (the molar equivalence ratio of isocyanate groups / hydroxyl groups was 44), the same method as Example 1 was used to produce a polyisocyanate composition PA-a9.

[Example 10]

(Production of Polyisocyanate Composition PA-a10)

With the exceptions of using 84.6 parts by mass of the polyisocyanate P-1 obtained in Synthesis Example 2-1, 5.4 parts by mass of the mixture of HES/TBA and HES/DMCHA obtained in Synthesis Example 1-4 (the molar equivalence ratio of isocyanate groups / hydroxyl groups was 23), 9.4 parts by mass of the polyisocyanate P-2 obtained in Synthesis Example 2-2, and 0.6 parts by mass of MPG-130 (the molar equivalence ratio of isocyanate groups / hydroxyl groups was 37), the same method as Example 1 was used to produce a polyisocyanate composition PA-a10.

[Example 11]

(Production of Polyisocyanate Composition PA-a11)

With the exceptions of using 84.6 parts by mass of the polyisocyanate P-1 obtained in Synthesis Example 2-1, and 5.4 parts by mass of the HES/TBA obtained in Synthesis Example 1-1 (the molar equivalence ratio of isocyanate groups / hydroxyl groups was 25), the same method as that described in [1.] of Example 1 was used to produce an ionic polyisocyanate compound. Moreover, with the exceptions of using 9.4 parts by mass of the polyisocyanate P-1 obtained in

Synthesis Example 2-1, and 0.6 parts by mass of MPG-130 (the molar equivalence ratio of isocyanate groups / hydroxyl groups was 35), the same method as that described in [2.] of Example 1 was used to produce a nonionic polyisocyanate compound. The same method as that described in [3.] of Example 1 was then used to produce a polyisocyanate composition PA-a11.

[Example 12]

(Production of Polyisocyanate Composition PA-a12)

With the exceptions of using 89.3 parts by mass of the polyisocyanate P-1 obtained in Synthesis Example 2-1, 5.7 parts by mass of the HES/TBA obtained in Synthesis Example 1-1 (the molar equivalence ratio of isocyanate groups / hydroxyl groups was 25), 4.7 parts by mass of the polyisocyanate P-2 obtained in Synthesis Example 2-2, and 0.3 parts by mass of MPG-130 (the molar equivalence ratio of isocyanate groups / hydroxyl groups was 37), the same method as Example 1 was used to produce a polyisocyanate composition PA-a12.

[Example 13]

(Production of Polyisocyanate Composition PA-a13)

With the exceptions of using 84.7 parts by mass of the polyisocyanate P-1 obtained in Synthesis Example 2-1, 5.3 parts by mass of the HES/DMCHA obtained in Synthesis Example 1-3 (the molar equivalence ratio of isocyanate groups / hydroxyl groups was 21), 9.4 parts by mass of the polyisocyanate P-2 obtained in Synthesis Example 2-2, and 0.6 parts by mass of MPG-130 (the molar equivalence ratio of isocyanate groups / hydroxyl groups was 37), the same method as Example 1 was used to produce a polyisocyanate composition PA-a13.

[Example 14]

(Production of Polyisocyanate Composition PA-a14)

3.5 parts by mass of 3-cyclohexylaminopropanesulfonic acid (hereinafter, may be abbreviated as "CAPS") and 2.0 parts by mass of TBA were added to 84.5 parts by mass of the polyisocyanate P-1 obtained in Synthesis Example 2-1, and the reaction was allowed to proceed by stirring the mixture, under a stream of nitrogen and under reflux conditions at 100°C for 5 hours, such that the mole ratio of isocyanate groups relative to amino groups became 32, thereby obtaining a polyisocyanate compound containing an anionic compound. Subsequently, with the exceptions of using 9.4 parts by mass of the polyisocyanate P-2 obtained in Synthesis Example 2-2, and 0.6 parts by mass of MPG-130 (the molar equivalence ratio of isocyanate groups / hydroxyl groups was 37), the same method as Example 1 was used to obtain a polyisocyanate composition PA-a14.

[Example 15]

(Production of Polyisocyanate Composition PA-a15)

With the exceptions of using 84.6 parts by mass of the polyisocyanate P-1 obtained in Synthesis Example 2-1, 5.4 parts by mass of the HPS/TBA obtained in Synthesis Example 1-2 (the molar equivalence ratio of isocyanate groups / hydroxyl groups was 25), 9.4 parts by mass of the polyisocyanate P-2 obtained in Synthesis Example 2-2, and 0.6 parts by mass of MPG-130 (the molar equivalence ratio of isocyanate groups / hydroxyl groups was 37), the same method as Example 1 was used to produce a polyisocyanate composition PA-a15.

[Example 16]

(Production of Polyisocyanate Composition PA-a16)

5.4 parts by mass of the HES/TBA obtained in Synthesis Example 1-1 was added to 94 parts by mass of the polyisocyanate P-1 obtained in Synthesis Example 2-1 (the molar equivalence ratio of isocyanate groups / hydroxyl groups was 25), and the reaction was allowed to proceed by stirring the mixture under a stream of nitrogen and under reflux conditions at 120°C for 3 hours. Subsequently, 0.6 parts by mass of MPG-130 was added (the molar equivalence ratio of isocyanate groups / hydroxyl groups was 37), and the reaction was allowed to proceed by stirring under a stream of nitrogen at 90°C for 6 hours, thereby obtaining a polyisocyanate composition PA-a16.

[Example 17]

(Production of Polyisocyanate Composition PA-a17)

With the exceptions of using 47 parts by mass of the polyisocyanate P-1 obtained in Synthesis Example 2-1, 3 parts by mass of the HES/TBA obtained in Synthesis Example 1-1 (the molar equivalence ratio of isocyanate groups / hydroxyl groups was 25), 47.2 parts by mass of the polyisocyanate P-3 obtained in Synthesis Example 2-3, and 2.8 parts by mass of MPG-130 (the molar equivalence ratio of isocyanate groups / hydroxyl groups was 37), the same method as Example 1 was used to produce a polyisocyanate composition PA-a17.

[Example 18]

(Production of Polyisocyanate Composition PA-a18)

With the exceptions of using 89.3 parts by mass of the polyisocyanate P-2 obtained in Synthesis Example 2-2, 5.7 parts by mass of the HES/TBA obtained in Synthesis Example 1-1 (the molar equivalence ratio of isocyanate groups / hydroxyl groups was 25), 4.7 parts by mass of the polyisocyanate P-4 obtained in Synthesis Example 2-4, and 0.3 parts by mass of MPG-130 (the molar equivalence ratio of isocyanate groups / hydroxyl groups was 37), the same method as Example 1 was used to produce a polyisocyanate composition PA-a18.

[Example 19]

(Production of Polyisocyanate Composition PA-a19)

1. Preparation of Ionic Polyisocyanate Compound

3.6 parts by mass of the HES/TBA obtained in Synthesis Example 1-1 was added to 56.4 parts by mass of the polyisocyanate P-1 obtained in Synthesis Example 2-1 (the molar equivalence ratio of isocyanate groups / hydroxyl groups was 33), and the reaction was allowed to proceed by stirring the mixture under a stream of nitrogen and under reflux conditions at 120°C for 3 hours. Subsequently, the reflux condenser was removed, and the reaction was continued under stirring at 100°C for one hour, thereby obtaining an ionic polyisocyanate compound.

2. Preparation of Nonionic Polyisocyanate Compound

0.6 parts by mass of a polyethylene glycol monomethyl ether with an average number of ethylene oxide repeating units of 9.4 (manufactured by Nippon Nyukazai Co., Ltd., under the trade name of MPG-130) was added to 9.4 parts by mass of the polyisocyanate P-2 obtained in Synthesis Example 2-2 (the molar equivalence ratio of isocyanate groups / hydroxyl groups was 39), and the reaction was allowed to proceed by stirring the mixture under a stream of nitrogen at 90°C for 6 hours. After completion of the reaction, a nonionic polyisocyanate compound was obtained.

3. Production of Polyisocyanate Composition PA-a19

The ionic polyisocyanate compound obtained above in [1.], the nonionic polyisocyanate compound obtained above in [2.], and 10.0 parts by mass of the polyisocyanate P-1 obtained in Synthesis Example 2-1 were stirred at 60°C for 2 hours under a nitrogen atmosphere until a uniform mixture was achieved, thereby obtaining a polyisocyanate composition PA-a19.

[Example 20]

(Production of Blocked Polyisocyanate Composition PA-a20)

30.6 g of 3,5-dimethylpyrazole was added to 69.4 g of the polyisocyanate PA-a3 obtained in Example 3 and 42.9 g of dipropylene glycol monomethyl ether, and the reaction was allowed to proceed under stirring at 80°C for two hours, thereby obtaining a blocked polyisocyanate PA-a20.

[Example 21]

(Production of Blocked Polyisocyanate Composition PA-a21)

30.6 g of 3,5-dimethylpyrazole was added to 69.4 g of the polyisocyanate PA-a16 obtained in Example 16 and 42.9 g of dipropylene glycol monomethyl ether, and the reaction was allowed to proceed under stirring at 80°C for two hours, thereby obtaining a blocked polyisocyanate PA-a21.

[Comparative Example 1]

(Production of Polyisocyanate Composition PA-b1)

5.4 parts by mass of the HES/TBA obtained in Synthesis Example 1-1 was added to 84.6 parts by mass of the polyisocyanate P-1 obtained in Synthesis Example 2-1 (the molar equivalence ratio of isocyanate groups / hydroxyl groups was 33), and the reaction was allowed to proceed by stirring the mixture under a stream of nitrogen and under reflux conditions at 120°C for 3 hours. Subsequently, the reflux condenser was removed, and the reaction was continued under stirring at 100°C for one hour, thereby obtaining an ionic polyisocyanate compound.

Subsequently, 10.0 parts by mass of the polyisocyanate P-2 obtained in Synthesis Example 2-2 was added to the obtained ionic polyisocyanate compound, and the resulting mixture was stirred at 60°C for 2 hours under a nitrogen atmosphere until a uniform mixture was achieved, thereby obtaining a polyisocyanate composition PA-b1.

[Comparative Example 2]

(Production of Polyisocyanate Composition PA-b2)

5.1 parts by mass of a polyethylene glycol monomethyl ether with an average number of ethylene oxide repeating units of 9.4 (manufactured by Nippon Nyukazai Co., Ltd., under the trade name of MPG-130) was added to 84.9 parts by mass of the polyisocyanate P-2 obtained in Synthesis Example 2-2 (the molar equivalence ratio of isocyanate groups / hydroxyl groups was 40), and the reaction was allowed to proceed by stirring the mixture under a stream of nitrogen at 90°C for 6 hours. Upon completion of the reaction, a nonionic polyisocyanate compound was obtained.

Subsequently, 10.0 parts by mass of the polyisocyanate P-1 obtained in Synthesis Example 2-1 was added, and the resulting mixture was stirred at 60°C for 2 hours under a nitrogen atmosphere until a uniform mixture was achieved, thereby obtaining a polyisocyanate composition PA-b2.

[Comparative Example 3]

(Production of Polyisocyanate Composition PA-b3)

1. Preparation of Ionic Polyisocyanate Compound

1.8 parts by mass of the HES/TBA obtained in Synthesis Example 1-1 was added to 28.2 parts by mass of the polyisocyanate P-1 obtained in Synthesis Example 2-1 (the molar equivalence ratio of isocyanate groups / hydroxyl groups was 33), and the reaction was allowed to proceed by stirring the mixture under a stream of nitrogen and under reflux conditions at 120°C for 3 hours. Subsequently, the reflux condenser was removed, and the reaction was continued under stirring at 100°C for one hour, thereby obtaining an ionic polyisocyanate compound.

2. Preparation of Nonionic Polyisocyanate Compound

4.0 parts by mass of a polyethylene glycol monomethyl ether with an average number of ethylene oxide repeating units of 9.4 (manufactured by Nippon Nyukazai Co., Ltd., under the trade name of MPG-130) was added to 66.0 parts by mass of the polyisocyanate P-2 obtained in Synthesis Example 2-2 (the molar equivalence ratio of isocyanate groups / hydroxyl groups was 39), and the reaction was allowed to proceed by stirring the mixture under a stream of nitrogen at 90°C for 6 hours. After completion of the reaction, a nonionic polyisocyanate compound was obtained.

3. Production of Polyisocyanate Composition PA-b3

The ionic polyisocyanate compound obtained above in [1.] and the nonionic polyisocyanate compound obtained above in [2.] were stirred at 60°C for 2 hours under a nitrogen atmosphere until a uniform mixture was achieved, thereby obtaining a polyisocyanate composition PA-b3.

[Comparative Example 4]

(Production of Polyisocyanate Composition PA-b4)

With the exceptions of using 14.1 parts by mass of the polyisocyanate P-1 obtained in Synthesis Example 2-1, 0.9 parts by mass of the HES/TBA obtained in Synthesis Example 1-1 (the molar equivalence ratio of isocyanate groups / hydroxyl groups was 33), 80.2 parts by mass of the polyisocyanate P-2 obtained in Synthesis Example 2-2, and 4.8 parts by mass of MPG-130 (the molar equivalence ratio of isocyanate groups / hydroxyl groups was 40), the same method as Comparative Example 3 was used to produce a polyisocyanate composition PA-b4.

[Comparative Example 5]

(Production of Polyisocyanate Composition PA-b5)

With the exceptions of using 4.7 parts by mass of the polyisocyanate P-1 obtained in Synthesis Example 2-1, 0.3 parts by mass of the HES/TBA obtained in Synthesis Example 1-1 (the molar equivalence ratio of isocyanate groups / hydroxyl groups was 33), 89.6 parts by mass of the polyisocyanate P-2 obtained in Synthesis Example 2-2, and 5.4 parts by mass of MPG-130 (the molar equivalence ratio of isocyanate groups / hydroxyl groups was 39), the same method as Comparative Example 3 was used to produce a polyisocyanate composition PA-b5.

Measurement and evaluation of the physical properties of each polyisocyanate composition were conducted in accordance with the methods described above. The results are shown in the tables below.

Table 1

| | | | | Example 1 | Example 2 | Example 3 | Example 4 |
|---|---|---|---|---|---|---|---|
| Polyisocyanate composition | | | | PA-a1 | PA-a2 | PA-a3 | PA-a4 |
| Composition | Ionic polyisocyanate compound (A) | Poly isocyanate | Type | P-1 | P-1 | P-1 | P-1 |
| | | | Amount (parts by mass) | 92.1 | 89.3 | 84.6 | 75.2 |
| | | Ionic compound | Type | HES/TBA | HES/TBA | HES/TBA | HES/TBA |
| | | | Amount (parts by mass) | 5.9 | 5.7 | 5.4 | 4.8 |
| | Nonionic polyisocyanate compound (B) | Poly isocyanate | Type | P-2 | P-2 | P-2 | P-2 |
| | | | Amount (parts by mass) | 1.9 | 4.7 | 9.4 | 18.8 |
| | | Nonionic compound | Type | MPG-130 | MPG-130 | MPG-130 | MPG-130 |
| | | | Amount (parts by mass) | 0.1 | 0.3 | 0.6 | 1.1 |
| | Mass ratio (A)/(B) | | | 98/2 | 95/5 | 90/10 | 80/20 |
| | Mass ratio (a2)/(b2) | | | 98/2 | 95/5 | 90/10 | 80/20 |
| Physical properties | Total amount of uretdione groups and allophanate groups (mol%) | | | 5.6 | 6.4 | 7.6 | 10 |
| | Mole ratio of uretdione groups / allophanate groups | | | 0.4 | 0.6 | 0.8 | 1.3 |
| | Amount of structural component (a2) derived from ionic compound (% by mass) | | | 11.4 | 11.4 | 11.4 | 11.4 |
| | Amount of structural component (b2) derived from nonionic compound (% by mass) | | | 0.3 | 0.7 | 1.3 | 2.7 |
| | Viscosity (mPa·s/25°C) | | | 3000 | 3000 | 2700 | 2700 |
| | NCO content (% by mass) | | | 20.7 | 20.7 | 20.6 | 20.5 |
| Evaluations | Dispersibility in water | | | ○ | ○ | ○ | ○ |
| | Pot life | | | Δ | Δ | ○ | ○ |
| | Gloss | | | ○ | ○ | ○ | ○ |
| | Water resistance 1 | | | ○ | ○ | ○ | ○ |
| | Water resistance 2 | | | ○ | ○ | ○ | ○ |
| | Hardness | | | ○ | ○ | ○ | ○ |

Table 2

<table>
<tr><td colspan="4"></td><td>Ex. 5</td><td>Ex. 6</td><td>Ex. 7</td><td>Ex. 8</td><td>Ex. 9</td><td>Ex. 10</td></tr>
<tr><td colspan="4">Polyisocyanate composition</td><td>PA-a5</td><td>PA-a6</td><td>PA-a7</td><td>PA-a8</td><td>PA-a9</td><td>PA-a10</td></tr>
<tr><td rowspan="10">Composition</td><td rowspan="4">Ionic poly isocyanate compound (A)</td><td rowspan="2">Poly isocyanate</td><td>Type</td><td>P-1</td><td>P-1</td><td>P-1</td><td>P-1</td><td>P-1</td><td>P-1</td></tr>
<tr><td>Amount (parts by mass)</td><td>56.4</td><td>47</td><td>37.6</td><td>89.3</td><td>84.6</td><td>84.6</td></tr>
<tr><td rowspan="2">Ionic compound</td><td>Type</td><td>HES/TBA</td><td>HES/TBA</td><td>HES/TBA</td><td>HES/TBA</td><td>HES/TBA</td><td>HES/TBA +HES/DMCHA</td></tr>
<tr><td>Amount (parts by mass)</td><td>3.6</td><td>3</td><td>2.4</td><td>5.7</td><td>5.4</td><td>5.4</td></tr>
<tr><td rowspan="4">Nonionic poly isocyanate compound (B)</td><td rowspan="2">Poly isocyanate</td><td>Type</td><td>P-2</td><td>P-2</td><td>P-2</td><td>P-2</td><td>P-2</td><td>P-2</td></tr>
<tr><td>Amount (parts by mass)</td><td>37.7</td><td>47.2</td><td>56.6</td><td>4.5</td><td>9.4</td><td>9.4</td></tr>
<tr><td rowspan="2">Nonionic compound</td><td>Type</td><td>MPG-130</td><td>MPG-130</td><td>MPG-130</td><td>MPG-130</td><td>MPG-081</td><td>MPG-130</td></tr>
<tr><td>Amount (parts by mass)</td><td>2.3</td><td>2.8</td><td>3.4</td><td>0.5</td><td>0.6</td><td>0.6</td></tr>
<tr><td colspan="3">Mass ratio (A)/(B)</td><td>60/40</td><td>50/50</td><td>40/60</td><td>95/5</td><td>90/10</td><td>90/10</td></tr>
<tr><td colspan="3">Mass ratio (a2)/(b2)</td><td>70/30</td><td>60/40</td><td>50/50</td><td>90/10</td><td>90/10</td><td>90/10</td></tr>
<tr><td rowspan="5">Physical properties</td><td colspan="3">Total amount of uretdione groups and allophanate groups (mol%)</td><td>14.7</td><td>16.7</td><td>18.6</td><td>6.2</td><td>7.6</td><td>7.6</td></tr>
<tr><td colspan="3">Mole ratio of uretdione groups / allophanate groups</td><td>2.2</td><td>2.5</td><td>2.8</td><td>0.5</td><td>0.8</td><td>0.8</td></tr>
<tr><td colspan="3">Amount of structural component (a2) derived from ionic compound (% by mass)</td><td>11.4</td><td>9.5</td><td>7.6</td><td>11.4</td><td>11.4</td><td>11.1</td></tr>
<tr><td colspan="3">Amount of structural component (b2) derived from nonionic compound (% by mass)</td><td>5.3</td><td>6.6</td><td>8</td><td>1.3</td><td>8.8</td><td>8.7</td></tr>
<tr><td colspan="3">Viscosity (mPa·s/25°C)</td><td>2700</td><td>2500</td><td>2300</td><td>2700</td><td>2700</td><td>3000</td></tr>
</table>

| | NCO content (% by mass) | 20.4 | 20.3 | 20.2 | 20.4 | 20.4 | 20.6 |
|---|---|---|---|---|---|---|---|
| Evaluations | Dispersibility in water | ○ | ○ | ○ | ○ | ○ | ○ |
| | Pot life | ○ | ○ | ○ | ○ | ○ | ○ |
| | Gloss | ○ | ○ | ○ | ○ | ○ | ○ |
| | Water resistance 1 | ○ | ○ | ○ | ○ | ○ | ○ |
| | Water resistance 2 | ○ | ○ | ○ | ○ | ○ | ○ |
| | Hardness | Δ | Δ | Δ | ○ | ○ | ○ |

(Ex.: Example)

Table 3

| | | | | Example 11 | Example 12 | Example 13 | Example 14 | Example 15 |
|---|---|---|---|---|---|---|---|---|
| Polyisocyanate composition | | | | PA-a11 | PA-a12 | PA-a13 | PA-a14 | PA-a15 |
| Composition | Ionic poly isocyanate compound (A) | Poly isocyanate | Type | P-1 | P-1 | P-1 | P-1 | P-1 |
| | | | Amount (parts by mass) | 84.6 | 89.3 | 84.7 | 84.5 | 84.6 |
| | | Ionic compound | Type | HES/ TBA | HES/ TBA | HES/ DMCHA | CAPS+ TBA | HPS/ TBA |
| | | | Amount (parts by mass) | 5.4 | 5.7 | 5.3 | 5.5 | 5.4 |
| | Nonionic poly isocyanate compound (B) | Poly isocyanate | Type | P-1 | P-2 | P-2 | P-2 | P-2 |
| | | | Amount (parts by mass) | 9.4 | 4.7 | 9.4 | 9.4 | 9.4 |
| | | Nonionic compound | Type | MPG-130 | MPG-130 | MPG-130 | MPG-130 | MPG-130 |
| | | | Amount (parts by mass) | 0.6 | 0.3 | 0.6 | 0.6 | 0.6 |
| | Mass ratio (A)/(B) | | | 90/10 | 95/5 | 90/10 | 90/10 | 90/10 |
| | Mass ratio (a2)/(b2) | | | 90/10 | 90/10 | 90/10 | 90/10 | 90/10 |
| Physical properties | Total amount of uretdione groups and allophanate groups (mol%) | | | 7.1 | 6.3 | 7.6 | 7.6 | 7.6 |
| | Mole ratio of uretdione groups / allophanate groups | | | 0.7 | 0.5 | 0.8 | 0.8 | 0.8 |
| | Amount of structural component (a2) derived from ionic compound (% by mass) | | | 11.4 | 8.7 | 10.8 | 12.3 | 11.5 |
| | Amount of structural component (b2) derived from nonionic compound (% by mass) | | | 1.3 | 0.7 | 1.3 | 1.3 | 1.3 |
| | Viscosity (mPa·s/25°C) | | | 4000 | 2500 | 3000 | 3000 | 2700 |
| | NCO content (% by mass) | | | 20.6 | 20.8 | 20.6 | 20.6 | 20.6 |
| Evaluations | Dispersibility in water | | | ○ | ○ | ○ | ○ | ○ |
| | Pot life | | | ○ | Δ | ○ | ○ | ○ |
| | Gloss | | | ○ | ○ | ○ | ○ | ○ |
| | Water resistance 1 | | | ○ | ○ | ○ | ○ | ○ |
| | Water resistance 2 | | | ○ | ○ | ○ | Δ | ○ |

| | | | | | | |
|---|---|---|---|---|---|---|
| | Hardness | ○ | ○ | ○ | ○ | ○ |

Table 4

| | | | | Example 16 | Example 17 | Example 18 |
|---|---|---|---|---|---|---|
| Polyisocyanate composition | | | | PA-a16 | PA-a17 | PA-a18 |
| Composition | Ionic polyisocyanate compound (A) | Poly isocyanate | Type | P-1 | P-1 | P-2 |
| | | | Amount (parts by mass) | 94.0 | 47.0 | 89.3 |
| | | Ionic compound | Type | HES/TBA | HES/TBA | HES/TBA |
| | | | Amount (parts by mass) | 5.4 | 3.0 | 5.7 |
| | Nonionic polyisocyanate compound (B) | Poly isocyanate | Type | P-1 | P-3 | P-4 |
| | | | Amount (parts by mass) | - | 47.2 | 4.7 |
| | | Nonionic compound | Type | MPG-130 | MPG-130 | MPG-130 |
| | | | Amount (parts by mass) | 9.4 | 2.8 | 0.3 |
| | Mass ratio (A)/(B) | | | - | 50/50 | 95/5 |
| | Mass ratio (a2)/(b2) | | | 60/40 | 60/40 | 95/5 |
| Physical properties | Total amount of uretdione groups and allophanate groups (mol%) | | | 15.1 | 28.6 | 27.9 |
| | Mole ratio of uretdione groups / allophanate groups | | | 2.3 | 12.8 | 0.17 |
| | Amount of structural component (a2) derived from ionic compound (% by mass) | | | 9.5 | 9.5 | 11.4 |
| | Amount of structural component (b2) derived from nonionic compound (% by mass) | | | 6.6 | 6.6 | 0.7 |
| | Viscosity (mPa·s/25°C) | | | 4000 | 1000 | 2000 |
| | NCO content (% by mass) | | | 20.6 | 20.2 | 20.2 |

| | | | | |
|---|---|---|---|---|
| Evaluations | Dispersibility in water | ○ | ○ | ○ |
| | Pot life | ○ | ○ | Δ |
| | Gloss | ○ | ○ | ○ |
| | Water resistance 1 | ○ | ○ | ○ |
| | Water resistance 2 | ○ | Δ | Δ |
| | Hardness | Δ | Δ | Δ |

Table 5

| | | | | Example 19 |
|---|---|---|---|---|
| Polyisocyanate composition | | | | PA-a19 |
| Composition | Ionic polyisocyanate compound (A) | Poly isocyanate | Type | P-1 |
| | | | Amount (parts by mass) | 56.4 |
| | | Ionic compound | Type | HES/TBA |
| | | | Amount (parts by mass) | 3.6 |
| | Nonionic polyisocyanate compound (B) | Poly isocyanate | Type | P-2 |
| | | | Amount (parts by mass) | 9.4 |
| | | Nonionic compound | Type | MPG-130 |
| | | | Amount (parts by mass) | 0.6 |
| | Unmodified polyisocyanate compound (C) | Type | | P-1 |
| | | Amount (parts by mass) | | 30 |
| | Mass ratio (A)/(B) | | | 85/15 |
| | Mass ratio (a2)/(b2) | | | 90/10 |
| Physical properties | Total amount of uretdione groups and allophanate groups (mol%) | | | 9.1 |
| | Mole ratio of uretdione groups / allophanate groups | | | 1.1 |
| | Amount of structural component (a2) derived from ionic compound (% by mass) | | | 11.4 |
| | Amount of structural component (b2) derived from nonionic compound (% by mass) | | | 1.3 |

| | | |
|---|---|---|
| | Viscosity (mPa·s/25°C) | 2700 |
| | NCO content (% by mass) | 20.6 |
| Evaluations | Dispersibility in water | ○ |
| | Pot life | ○ |
| | Gloss | ○ |
| | Water resistance 1 | ○ |
| | Water resistance 2 | ○ |
| | Hardness | ○ |

Table 6

| | | | Example 20 | Example 21 |
|---|---|---|---|---|
| Blocked polyisocyanate composition | | | PA-a20 | PA-a21 |
| Composition | Polyisocyanate composition | Type | PA-a3 | PA-a16 |
| | | Amount (parts by mass) | 69.4 | 69.4 |
| | Blocking agent | | 30.6 | 30.6 |
| | Mass ratio (A)/(B) | | - | - |
| | Mass ratio (a2)/(b2) | | 90/10 | 60/40 |
| Physical properties | Total amount of uretdione groups and allophanate groups (mol%) | | 7.6 | 15.1 |
| | Mole ratio of uretdione groups / allophanate groups | | 0.8 | 2.3 |
| | Amount of structural component (a2) derived from ionic compound (% by mass) | | 11.4 | 9.5 |
| | Amount of structural component (b2) derived from nonionic compound (% by mass) | | 1.3 | 6.6 |
| | Viscosity (mPa·s/25°C) | | 5500 | 6000 |
| Evaluations | Dispersibility in water | | ○ | ○ |
| | Pot life | | ○ | ○ |
| | Gloss | | ○ | ○ |
| | Water resistance 1 | | ○ | ○ |
| | Water resistance 2 | | ○ | ○ |

| | | | |
|---|---|---|---|
| | Hardness | ○ | Δ |

Table 7

| | | | | C. Ex. 1 | C. Ex. 2 | C. Ex. 3 | C. Ex. 4 | C. Ex. 5 |
|---|---|---|---|---|---|---|---|---|
| Polyisocyanate composition | | | | PA-b1 | PA-b2 | PA-b3 | PA-b4 | PA-b5 |
| Composition | Ionic poly isocyanate compound (A) | Poly isocyanate | Type | P-1 | - | P-1 | P-1 | P-1 |
| | | | Amount (parts by mass) | 84.6 | - | 28.2 | 14.1 | 4.7 |
| | | Ionic compound | Type | HES/ TBA | - | HES/ TBA | HES/ TBA | HES/ TBA |
| | | | Amount (parts by mass) | 5.4 | - | 1.8 | 0.9 | 0.3 |
| | Nonionic poly isocyanate compound (B) | Poly isocyanate | Type | - | P-2 | P-2 | P-2 | P-2 |
| | | | Amount (parts by mass) | - | 84.9 | 66 | 80.2 | 89.6 |
| | | Nonionic compound | Type | - | MPG-130 | MPG-130 | MPG-130 | MPG-130 |
| | | | Amount (parts by mass) | - | 5.1 | 4 | 4.8 | 5.4 |
| | Unmodified poly isocyanate compound (C) | Type | | P-2 | P-1 | - | - | - |
| | | Amount (parts by mass) | | 10 | 10 | - | - | - |
| | Mass ratio (A)/(B) | | | 100/0 | 0/100 | 30/70 | 15/85 | 5/95 |
| | Mass ratio (a2)/(b2) | | | 100/0 | 0/100 | 40/60 | 20/80 | 7/93 |
| Physical properties | Total amount of uretdione groups and allophanate groups (mol%) | | | 7.1 | 23.2 | 19.5 | 22.9 | 24.5 |
| | Mole ratio of uretdione groups / allophanate groups | | | 0.7 | 3.8 | 2.9 | 3.4 | 3.6 |
| | Amount of structural component (a2) derived from ionic compound (% by mass) | | | 17.1 | - | 6.6 | 2.8 | 0.9 |

| | | | | | | |
|---|---|---|---|---|---|---|
| | Amount of structural component (b2) derived from nonionic compound (% by mass) | - | 13.3 | 8.6 | 11.3 | 12.6 |
| | Viscosity (mPa·s/25°C) | 2700 | 2000 | 2000 | 1500 | 1500 |
| | NCO content (% by mass) | 20.8 | 21.7 | 20.1 | 20.2 | 21.2 |
| Evaluations | Dispersibility in water | ○ | × | ○ | Δ | Δ |
| | Pot life | ○ | ○ | × | ○ | ○ |
| | Gloss | × | Δ | ○ | Δ | × |
| | Water resistance 1 | Measurement impossible | ○ | ○ | ○ | Measurement impossible |
| | Water resistance 2 | | ○ | × | Δ | |
| | Hardness | × | × | Δ | × | × |

(C. Ex.: Comparative Example)

As shown in the above tables, in the case of the polyisocyanate compositions PA-a1 to PA-a19 (Examples 1 to 19) and the blocked polyisocyanate compositions PA-a20 and PA-a21 (Examples 20 and 21), which contained the ionic polyisocyanate compound (A) and the nonionic polyisocyanate compound (B), and in which the mass ratio (a2)/(b2) fell within the prescribed range, the dispersibility in water, the pot life upon use as a coating composition, and the external appearance, water resistance and hardness upon formation of a coating film were all favorable.

Further, comparison of the polyisocyanate compositions PA-a1 to PA-a7 (Examples 1 to 7), which had different values of the mass ratio (A)/(B) and the mass ratio (a2)/(b2), revealed that as the mass ratio (A)/(B) and the mass ratio (a2)/(b2) decreased, the pot life tended to become more superior, whereas as the mass ratio (A)/(B) and the mass ratio (a2)/(b2) increased, the hardness upon formation of a coating film tended to become more favorable.

Furthermore, comparison of the polyisocyanate compositions PA-a2 and PA-a8 (Examples 2 and 8), which had the same value of the mass ratio (A)/(B) but different values of the mass ratio (a2)/(b2), revealed that as the mass ratio (a2)/(b2) decreased, the pot life tended to become more superior.

Comparison of the polyisocyanate compositions PA-a3 and PA-a11 (Examples 3 and 11), which used different types of polyisocyanate compounds as the raw material of the nonionic polyisocyanate compound, revealed that regardless of the type of polyisocyanate compound, the dispersibility in water, the pot life upon use as a coating composition, and the external appearance, water resistance and hardness upon formation of a coating film were all favorable.

Comparison of the polyisocyanate compositions PA-a8 and PA-a12 (Examples 8 and 12), which had different values of the amount of structural units derived from the ionic compound and the amount of structural units derived from the nonionic compound, revealed that as the amount of structural units derived from the ionic compound and the amount of structural units derived from the nonionic compound increased, the pot life tended to become more superior.

Comparison of the polyisocyanate compositions PA-a6 and PA-a17 (Examples 6 and 17), which used different types of polyisocyanate compounds as the raw material of the nonionic polyisocyanate compound, revealed that as the total amount of uretdione groups and allophanate groups and the mole ratio of uretdione groups / allophanate groups decreased, and as the viscosity of the composition increased, the water resistance to 40°C hot water upon formation of a coating film tended to become more superior.

Comparison of the polyisocyanate compositions PA-a2 and PA-a19 (Examples 2 and 19), which used different types of polyisocyanate compounds as the raw materials of the ionic polyisocyanate compound and the nonionic polyisocyanate compound, revealed that as the total amount of uretdione groups and allophanate groups decreased, and as the mole ratio of uretdione groups / allophanate groups increased, the water resistance to 40°C hot water and the hardness upon formation of a coating film tended to become more superior.

In contrast, in the polyisocyanate composition Pa-b1 (Comparative Example 1), which contained the ionic polyisocyanate compound (A) but did not contain the nonionic polyisocyanate compound (B), the polyisocyanate composition Pa-b2 (Comparative Example 2), which contained the nonionic polyisocyanate compound (B) but did not contain the ionic polyisocyanate compound (A), and the polyisocyanate compositions PA-b3 to PA-b5 (Comparative Examples 3 to 5), which contained the ionic polyisocyanate compound (A) and the nonionic polyisocyanate compound (B), but in which the mass ratio (a2)/(b2) was less than 50/50, no compositions in which the dispersibility in water, the pot life

upon use as a coating composition, and the external appearance, water resistance and hardness upon formation of a coating film were all favorable were obtained.

INDUSTRIAL APPLICABILITY

The polyisocyanate composition of the present embodiment makes it possible to realize excellent pot life and dispersibility when dispersed in water or a main agent containing water, and excellent external appearance, water resistance and hardness when used to form a coating film. The coating composition of the present embodiment contains the aforementioned polyisocyanate composition, and realizes excellent external appearance, water resistance and hardness when used to form a coating film. The coated substrate of the present embodiment has a coating film obtained by curing the aforementioned coating composition, and exhibits excellent external appearance, water resistance and hardness.

## Claims

1. A polyisocyanate composition comprising:

   an ionic polyisocyanate compound (A) derived from at least one ionic compound selected from the group consisting of anionic compounds and cationic compounds, and a polyisocyanate compound (a1), the ionic polyisocyanate (A) being a reaction product of the at least one ionic compound and the polyisocyanate compound (a1), and
   a nonionic polyisocyanate compound (B) derived from a nonionic compound and a polyisocyanate compound (b1), the nonionic polyisocyanate (B) being a reaction product of the nonionic compound and the polyisocyanate compound (b1), wherein
   the polyisocyanate compound (a1) and the polyisocyanate compound (b1) are each a polyisocyanate compound derived from at least one diisocyanate selected from the group consisting of aliphatic diisocyanates, alicyclic diisocyanates and aromatic diisocyanates,
   a mass ratio (a2)/(b2) of a structural unit (a2) derived from the ionic compound contained in the ionic polyisocyanate compound (A) relative to a structural unit (b2) derived from the nonionic compound contained in the nonionic polyisocyanate compound (B) is 50/50 to 98/2, the mass ratio (a2)/(b2) being measured by liquid chromatography - mass spectrometry, and the mass ratio (a2)/(b2) being a ratio of the modification rate by the ionic compound in the ionic polyisocyanate (A) relative to the modification rate by the nonionic compound in the nonionic polyisocyanate (B), and
   the nonionic compound is a polyalkylene glycol alkyl ether having a structure of general formula (I):

   $$HO-\left(R^{11}O\right)_{n11}-R^{12} \qquad (I)$$

   wherein in general formula (I), $R^{11}$ is an alkylene group having 1 to 4 carbon atoms, $R^{12}$ is an alkyl group having 1 to 4 carbon atoms, and n11 is 4.0 to 20.

2. The polyisocyanate composition according to Claim 1, wherein a mass ratio (A)/(B) of the ionic polyisocyanate compound (A) relative to the nonionic polyisocyanate compound (B) is 10/90 to 99/1, the mass ratio (A)/(B) being measured by liquid chromatography - mass spectrometry.

3. The polyisocyanate composition according to Claim 1 or 2, wherein

   the polyisocyanate composition comprises isocyanurate groups, uretdione groups and allophanate groups,
   a total amount of the uretdione groups and the allophanate groups relative to a total molar amount of the isocyanurate groups, iminooxadiazinedione groups, the uretdione groups, and the allophanate groups is1.0 mol% to 30.0 mol%, and
   a mole ratio of the uretdione groups relative to the allophanate groups is 0.1 to 20.0.

4. The polyisocyanate composition according to any one of claims 1 to 3, wherein a mass fraction of the ionic compound bonded to the ionic polyisocyanate compound (A), relative to a total mass of the polyisocyanate composition, is 1% by mass to 40.0% by mass, the mass fraction being measured by liquid chromatography - mass spectrometry.

**5.** The polyisocyanate composition according to any one of claims 1 to 4, wherein a mass fraction of the nonionic compound bonded to the nonionic polyisocyanate compound (B), relative to a total mass of the polyisocyanate composition, is 0.1% by mass to 10.0% by mass, the mass fraction being measured by liquid chromatography - mass spectrometry.

**6.** The polyisocyanate composition according to any one of claims 1 to 5, wherein the polyalkylene glycol alkyl ether is polyethylene glycol (mono)methyl ether.

**7.** The polyisocyanate composition according to any one of claims 1 to 6, wherein the anionic compound is at least one compound selected from the group consisting of compounds containing a carboxylic acid group, compounds containing a phosphoric acid group, and compounds containing a sulfonic acid group.

**8.** The polyisocyanate composition according to any one of claims 1 to 7, wherein the anionic compound comprises a compound containing a sulfonic acid group, and the compound containing a sulfonic acid group is at least one sulfonic acid selected from the group consisting of a sulfonic acid containing a hydroxyl group and a sulfonic acid containing an amino group.

**9.** The polyisocyanate composition according to Claim 8, wherein the sulfonic acid containing a hydroxyl group is a compound of general formula (II):

$$HO\text{-}R^{21}\text{-}SO_3H \qquad (II)$$

wherein in general formula (II), $R^{21}$ is a hydrocarbon group having 1 to 10 carbon atoms which may contain at least one moiety selected from the group consisting of a hydroxyl group, an ether linkage, an ester linkage, a carbonyl group and an imino group, $R^{21}$ may include a cyclic structure, and the cyclic structure is an aromatic ring, a 5-membered ring or 6-membered ring containing two nitrogen atoms, or a 5-membered ring or 6-membered ring containing a nitrogen atom and an oxygen atom.

**10.** The polyisocyanate composition according to Claim 8, wherein the sulfonic acid containing an amino group is a compound of general formula (III):

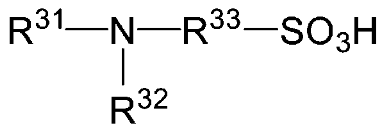

( III )

wherein in general formula (III), $R^{31}$ and $R^{32}$ are each independently a hydrogen atom or a hydrocarbon group having 1 to 12 carbon atoms which may contain a hydroxyl group, at least one of $R^{31}$ and $R^{32}$ is a hydrogen atom, and $R^{33}$ is a hydrocarbon group having 1 to 12 carbon atoms which may contain a hydroxyl group.

**11.** The polyisocyanate composition according to any one of claims 1 to 10, wherein at least a portion of isocyanate groups of the ionic polyisocyanate compound (A) and/or the nonionic polyisocyanate compound (B) is blocked with a thermally dissociable blocking agent.

**12.** A coating composition comprising: a polyisocyanate composition of any one of claims 1 to 11; and a resin.

**13.** A coated substrate coated with a coating composition of Claim 12.

## Patentansprüche

**1.** Polyisocyanatzusammensetzung, umfassend:

eine ionische Polyisocyanatverbindung (A), welche von mindestens einer ionischen Verbindung, ausgewählt aus der Gruppe bestehend aus anionischen Verbindungen und kationischen Verbindungen, und einer Polyisocyanatverbindung (a1) abgeleitet ist, wobei das ionische Polyisocyanat (A) ein Reaktionsprodukt der mindestens einen ionischen Verbindung und der Polyisocyanatverbindung (a1) ist, und
eine nichtionische Polyisocyanatverbindung (B), welche von einer nichtionischen Verbindung und einer Polyisocyanatverbindung (b1) abgeleitet ist, wobei das nichtionische Polyisocyanat (B) ein Reaktionsprodukt der nichtionischen Verbindung und der Polyisocyanatverbindung (b1) ist,
wobei
die Polyisocyanatverbindung (a1) und die Polyisocyanatverbindung (b1) jeweils eine Polyisocyanatverbindung sind, die von mindestens einem Diisocyanat abgeleitet ist, ausgewählt aus der Gruppe bestehend aus aliphatischen Diisocyanaten, alicyclischen Diisocyanaten und aromatischen Diisocyanaten,
ein Massenverhältnis (a2)/(b2) einer Struktureinheit (a2), die von der in der ionischen Polyisocyanatverbindung (A) enthaltenen ionischen Verbindung abgeleitet ist, in Relation zu einer Struktureinheit (b2), die von der in der nichtionischen Polyisocyanatverbindung (B) enthaltenen nichtionischen Verbindung abgeleitet ist, 50/50 bis 98/2 beträgt, wobei das Massenverhältnis (a2)/(b2) mittels Flüssigkeitschromatographie-Massenspektrometrie gemessen wird, wobei das Massenverhältnis (a2)/(b2) ein Verhältnis der Modifikationsrate durch die ionische Verbindung in dem ionischen Polyisocyanat (A) in Relation zu der Modifikationsrate durch die nichtionische Verbindung in dem nichtionischen Polyisocyanat (B) ist, und
die nichtionische Verbindung ein Polyalkylenglycolalkylether mit einer Struktur der allgemeinen Formel (I) ist:

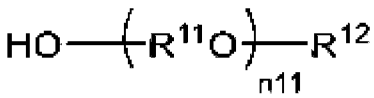

(I)

wobei in der allgemeinen Formel (I) $R^{11}$ eine Alkylengruppe mit 1 bis 4 Kohlenstoffatomen ist, $R^{12}$ eine Alkylgruppe mit 1 bis 4 Kohlenstoffatomen ist und n11 4,0 bis 20 ist.

2. Polyisocyanatzusammensetzung nach Anspruch 1, wobei ein Massenverhältnis (A)/(B) der ionischen Polyisocyanatverbindung (A) in Relation zu der nichtionischen Polyisocyanatverbindung (B) 10/90 bis 99/1 beträgt, wobei das Massenverhältnis (A)/(B) mittels Flüssigkeitschromatographie-Massenspektrometrie gemessen wird.

3. Polyisocyanatzusammensetzung nach Anspruch 1 oder 2, wobei

die Polyisocyanatzusammensetzung Isocyanuratgruppen, Uretdiongruppen und Allophanatgruppen umfasst,
eine Gesamtmenge der Uretdiongruppen und der Allophanatgruppen im Verhältnis zur Gesamtmolmenge der Isocyanuratgruppen, Iminooxadiazindiongruppen, der Uretdiongruppen und der Allophanatgruppen 1,0 Mol-% bis 30,0 Mol-% beträgt, und
ein Molverhältnis der Uretdiongruppen in Relation zu den Allophanatgruppen 0,1 bis 20,0 ist.

4. Polyisocyanatzusammensetzung nach einem der Ansprüche 1 bis 3, wobei der Massenanteil der ionischen Verbindung, die an die ionische Polyisocyanatverbindung (A) gebunden ist, in Relation zur Gesamtmasse der Polyisocyanatzusammensetzung, 1 Massen-% bis 40,0 Massen-% beträgt, wobei der Massenanteil mittels Flüssigkeitschromatographie-Massenspektrometrie gemessen wird.

5. Polyisocyanatzusammensetzung nach einem der Ansprüche 1 bis 4, wobei der Massenanteil der nichtionischen Verbindung, die an die nichtionische Polyisocyanatverbindung (B) gebunden ist, in Relation zur Gesamtmasse der Polyisocyanatzusammensetzung, 0,1 Massen-% bis 10,0 Massen-% beträgt, wobei der Massenanteil mittels Flüssigkeitschromatographie-Massenspektrometrie gemessen wird.

6. Polyisocyanatzusammensetzung nach einem der Ansprüche 1 bis 5, wobei der Polyalkylenglycolalkylether Polyethylenglycol-(mono)methylether ist.

7. Polyisocyanatzusammensetzung nach einem der Ansprüche 1 bis 6, wobei die anionische Verbindung mindestens eine Verbindung ist, ausgewählt aus der Gruppe bestehend aus Verbindungen, die eine Carbonsäuregruppe enthalten, Verbindungen, die eine Phosphorsäuregruppe enthalten, und Verbindungen, die eine Sulfonsäuregruppe enthalten.

8. Polyisocyanatzusammensetzung nach einem der Ansprüche 1 bis 7, wobei die anionische Verbindung eine Verbindung umfasst, die eine Sulfonsäuregruppe enthält und die eine Sulfonsäuregruppe enthaltende Verbindung mindestens eine Sulfonsäure ist, ausgewählt aus der Gruppe bestehend aus einer Sulfonsäure, die eine Hydroxylgruppe enthält, und einer Sulfonsäure, die eine Aminogruppe enthält.

9. Polyisocyanatzusammensetzung nach Anspruch 8, wobei die eine Hydroxylgruppe enthaltende Sulfonsäure eine

Verbindung der allgemeinen Formel (II) ist:

$$HO\text{-}R^{21}\text{-}SO_3H \qquad (II)$$

wobei in der allgemeinen Formel (II) $R^{21}$ eine Kohlenwasserstoffgruppe mit 1 bis 10 Kohlenstoffatomen ist, die mindestens einen Rest enthalten kann, ausgewählt aus der Gruppe bestehend aus einer Hydroxylgruppe, einer Etherbindung, einer Esterbindung, einer Carbonylgruppe und einer Iminogruppe, wobei $R^{21}$ eine cyclische Struktur beinhalten kann, wobei die cyclische Struktur ein aromatischer Ring, ein 5-gliedriger Ring oder 6-gliedriger Ring, der zwei Stickstoffatome enthält, oder ein 5-gliedriger Ring oder 6-gliedriger Ring, der ein Stickstoffatom und ein Sauerstoffatom enthält, ist.

**10.** Polyisocyanatzusammensetzung nach Anspruch 8, wobei die eine Aminogruppe enthaltende Sulfonsäure eine Verbindung der allgemeinen Formel (III) ist:

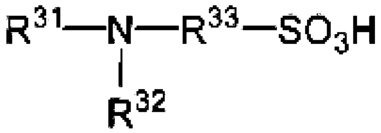

(III)

wobei in der allgemeinen Formel (III) $R^{31}$ und $R^{32}$ jeweils unabhängig ein Wasserstoffatom oder eine Kohlenwasserstoffgruppe mit 1 bis 12 Kohlenstoffatomen, die eine Hydroxylgruppe enthalten kann, sind, wobei mindestens eines von $R^{31}$ und $R^{32}$ ein Wasserstoffatom ist, und $R^{33}$ eine Kohlenwasserstoffgruppe mit 1 bis 12 Kohlenstoffatomen ist, die eine Hydroxylgruppe enthalten kann.

**11.** Polyisocyanatzusammensetzung nach einem der Ansprüche 1 bis 10, wobei mindestens ein Teil der Isocyanatgruppen der ionischen Polyisocyanatverbindung (A) und/oder der nichtionischen Polyisocyanatverbindung (B) mit einem thermisch dissoziierbaren Blockierungsmittel blockiert ist.

**12.** Beschichtungszusammensetzung, umfassend: eine Polyisocyanatzusammensetzung nach einem der Ansprüche 1 bis 11; und ein Harz.

**13.** Beschichtetes Substrat, welches mit einer Beschichtungszusammensetzung nach Anspruch 12 beschichtet ist.

## Revendications

**1.** Composition de polyisocyanate comprenant :

un composé polyisocyanate ionique (A) dérivé d'au moins un composé ionique choisi dans le groupe constitué de composés anioniques et de composés cationiques, et un composé polyisocyanate (a1), le polyisocyanate ionique (A) étant un produit de réaction de l'au moins un composé ionique et du composé polyisocyanate (a1), et un composé polyisocyanate non ionique (B) dérivé d'un composé non ionique et d'un composé polyisocyanate (b1), le polyisocyanate non ionique (B) étant un produit de réaction du composé non ionique et du composé polyisocyanate (b1), dans laquelle

le composé polyisocyanate (a1) et le composé polyisocyanate (b1) sont chacun un composé polyisocyanate dérivé d'au moins un diisocyanate choisi dans le groupe constitué de diisocyanates aliphatiques, diisocyanates alicycliques et diisocyanates aromatiques,

un rapport en masse (a2)/(b2) d'un motif structural (a2) dérivé du composé ionique contenu dans le composé polyisocyanate ionique (A) par rapport à un motif structural (b2) dérivé du composé non ionique contenu dans le composé polyisocyanate non ionique (B) est de 50/50 à 98/2, le rapport en masse (a2)/(b2) étant mesuré par chromatographie en phase liquide - spectrométrie de masse, et le rapport en masse (a2)/(b2) étant un rapport du taux de modification par le composé ionique dans le polyisocyanate ionique (A) par rapport au taux de modification par le composé non ionique dans le polyisocyanate non ionique (B), et

le composé non ionique est un éther alkylique de polyalkylène glycol ayant une structure de formule générale (I) :

$$HO-(R^{11}O)_{n11}-R^{12} \qquad (I)$$

dans laquelle, dans la formule générale (I), $R^{11}$ est un groupe alkylène ayant 1 à 4 atomes de carbone, $R^{12}$ est un groupe alkyle ayant 1 à 4 atomes de carbone, et n11 va de 4,0 à 20.

2. Composition de polyisocyanate selon la revendication 1, dans laquelle un rapport en masse (A)/(B) du composé polyisocyanate ionique (A) par rapport au composé polyisocyanate non ionique (B) va de 10/90 à 99/1, le rapport en masse (A)/(B) étant mesuré par chromatographie en phase liquide - spectrométrie de masse.

3. Composition de polyisocyanate selon la revendication 1 ou 2, dans laquelle

   la composition de polyisocyanate comprend des groupes isocyanurate, des groupes uretdione et des groupes allophanate,
   une quantité totale des groupes uretdione et des groupes allophanate par rapport à une quantité molaire totale des groupes isocyanurate, des groupes iminooxadiazinedione, des groupes uretdione, et des groupes allophanate est de 1,0 % en moles à 30,0 % en moles, et
   un rapport molaire des groupes uretdione par rapport aux groupes allophanate va de 0,1 à 20,0.

4. Composition de polyisocyanate selon l'une quelconque des revendications 1 à 3, dans laquelle une fraction en masse du composé ionique lié au composé polyisocyanate ionique (A), par rapport à une masse totale de la composition de polyisocyanate, est de 1 % en masse à 40,0 % en masse, la fraction en masse étant mesurée par chromatographie en phase liquide - spectrométrie de masse.

5. Composition de polyisocyanate selon l'une quelconque des revendications 1 à 4, dans laquelle une fraction en masse du composé non ionique lié au composé polyisocyanate non ionique (B), par rapport à une masse totale de la composition de polyisocyanate, est de 0,1 % en masse à 10,0 % en masse, la fraction en masse étant mesurée par chromatographie en phase liquide - spectrométrie de masse.

6. Composition de polyisocyanate selon l'une quelconque des revendications 1 à 5, dans laquelle l'éther alkylique de polyalkylène glycol est l'éther (mono)méthylique de polyéthylène glycol.

7. Composition de polyisocyanate selon l'une quelconque des revendications 1 à 6, dans laquelle le composé anionique est au moins un composé choisi dans le groupe constitué de composés contenant un groupe acide carboxylique, de composés contenant un groupe acide phosphorique, et de composés contenant un groupe acide sulfonique.

8. Composition de polyisocyanate selon l'une quelconque des revendications 1 à 7, dans laquelle le composé anionique comprend un composé contenant un groupe acide sulfonique, et le composé contenant un groupe acide sulfonique est au moins un acide sulfonique choisi dans le groupe constitué d'un acide sulfonique contenant un groupe hydroxyle et d'un acide sulfonique contenant un groupe amino.

9. Composition de polyisocyanate selon la revendication 8, dans laquelle l'acide sulfonique contenant un groupe hydroxyle est un composé de formule générale (II) :

   $$HO-R^{21}-SO_3H \qquad (II)$$

   dans laquelle, dans la formule générale (II), $R^{21}$ est un groupe hydrocarboné ayant 1 à 10 atomes de carbone qui peut contenir au moins un groupement choisi dans le groupe constitué d'un groupe hydroxyle, d'une liaison éther, d'une liaison ester, d'un groupe carbonyle et d'un groupe imino, $R^{21}$ peut comporter une structure cyclique, et la structure cyclique est un cycle aromatique, un cycle à 5 chaînons ou un cycle à 6 chaînons contenant deux atomes d'azote, ou un cycle à 5 chaînons ou un cycle à 6 chaînons contenant un atome d'azote et un atome d'oxygène.

10. Composition de polyisocyanate selon la revendication 8, dans laquelle l'acide sulfonique contenant un groupe amino est un composé de formule générale (III) :

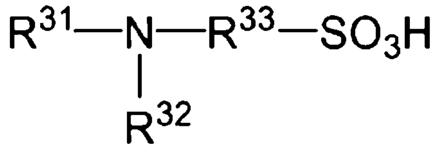

( III )

dans laquelle, dans la formule générale (III), $R^{31}$ et $R^{32}$ sont chacun indépendamment un atome d'hydrogène ou un groupe hydrocarboné ayant 1 à 12 atomes de carbone qui peut contenir un groupe hydroxyle, au moins l'un de $R^{31}$ et $R^{32}$ est un atome d'hydrogène, et $R^{33}$ est un groupe hydrocarboné ayant 1 à 12 atomes de carbone qui peut contenir un groupe hydroxyle.

**11.** Composition de polyisocyanate selon l'une quelconque des revendications 1 à 10, dans laquelle au moins une partie des groupes isocyanates du composé polyisocyanate ionique (A) et/ou du composé polyisocyanate non ionique (B) est bloquée par un agent de blocage dissociable thermiquement.

**12.** Composition de revêtement comprenant : une composition de polyisocyanate selon l'une quelconque des revendications 1 à 11 ; et une résine.

**13.** Substrat revêtu, revêtu d'une composition de revêtement selon la revendication 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI05222150 A
- JP HEI09328654 A
- JP 2015205957 A
- JP 2016017157 A
- EP 3812411 A1
- EP 4063418 A1
- EP 3560974 A1
- US 2012238697 A1